# EUROPEAN PATENT APPLICATION

(11) **EP 4 360 825 A1**
(43) Date of publication of application: **01.05.2024**
(21) Application number: 22828495.6
(22) Date of filing: 23.06.2022
(51) Int. Cl.: B25J 9/22, B23K 9/127

(54) **OFFLINE TEACHING DEVICE AND OFFLINE TEACHING METHOD**

(30) Priority: 23.06.2021 JP 2021104355
(71) Applicant: Panasonic Intellectual Property Management Co., Ltd., Kadoma-shi, Osaka 571-0057 (JP)
(72) Inventor: HIRAYAMA, Masaya, Kadoma-shi, Osaka 571-0057 (JP); OKAZAKI, Yoshiyuki, Kadoma-shi, Osaka 571-0057 (JP); OKUMA, Katsuaki, Kadoma-shi, Osaka 571-0057 (JP)
(74) Representative: Novagraaf International SA
(86) International application number: PCT/JP2022/025092
(87) International publication number: WO 2022/270579

(57) **Abstract**

This offline teaching device comprises: an input unit capable of receiving an operator operation; an acquisition unit that acquires 3D shape data of a workpiece and a sensor scan range; a generation unit that generates 3D regions to be scanned on the basis of the scan range and a specified scan interval; and a control unit that positions at least one 3D region on the 3D shape data of the workpiece on the basis of the operator operation, and creates and outputs, to a welding robot, a teaching program for scanning the 3D region on the basis of the positioned 3D region and a welding operation path.

## Description

### TECHNICAL FIELD

The present disclosure relates to an offline teaching device and an offline teaching method.

### BACKGROUND ART

Patent Literature 1 discloses an offline teaching device that displays, on a model diagram, an operation trajectory of a robot when a teaching program is executed and displays a part of a plurality of position detection commands and a part of a plurality of welding commands. The offline teaching device includes a display unit that displays a teaching program and a model diagram, a storage unit that stores commands constituting the teaching program and model data of the model diagram, and a control unit that controls the display unit and the storage unit. The teaching program includes a position detection program constituted by a plurality of position detection commands and a welding program constituted by a plurality of welding commands. Here, the commands, the position detection program, and the welding program constituting the teaching program are each created by an operator.

### CITATION LIST

### PATENT LITERATURE

Patent Literature 1: WO2016/021130

### SUMMARY OF INVENTION

### TECHNICAL PROBLEM

The present disclosure provides an offline teaching device and an offline teaching method for more efficiently creating a scanning operation teaching program of a sensor executed by a welding robot.

### SOLUTION TO PROBLEM

The present disclosure provides an offline teaching device including: an input unit capable of receiving an operator operation; an acquisition unit configured to acquire three-dimensional shape data of a workpiece produced by welding, an operation trajectory of the welding, and a scanning range of a sensor configured to scan an appearance shape of the workpiece; a generation unit configured to generate three-dimensional regions to be scanned by the sensor based on the acquired scanning range and a scanning section designated by the operator operation; and a control unit configured to dispose at least one of the three-dimensional regions on the three-dimensional shape data of the workpiece based on the operator operation input to the input unit, and configured to create and output, to a welding robot that performs the welding, a teaching program for scanning the three-dimensional region based on the disposed three-dimensional region and the operation trajectory of the welding.

In addition, the present disclosure provides an offline teaching method performed by an offline teaching device including one or more computers communicably connected to an input device capable of receiving an operator operation, the offline teaching method including: acquiring three-dimensional shape data of a workpiece produced by welding, an operation trajectory of the welding, and a scanning range of a sensor configured to scan an appearance shape of the workpiece; generating three-dimensional regions to be scanned by the sensor based on the acquired scanning range and a scanning section designated by the operator operation; disposing at least one of the three-dimensional regions on the three-dimensional shape data of the workpiece based on the operator operation acquired from the input device; and creating and outputting, to a welding robot that performs the welding, a teaching program for scanning the three-dimensional region based on the disposed three-dimensional region and the operation trajectory of the welding.

In addition, the present disclosure provides an offline teaching method performed using an offline teaching device including one or more computers communicably connected to an input device by an operator operating the input device, the offline teaching method including: inputting three-dimensional shape data of a workpiece produced by welding to the computer; inputting, to the computer, a scanning section in which an appearance shape of the workpiece is scanned; inputting, to the computer, a shape of a scanning portion scanned in the scanning section; and creating a teaching program for causing a welding robot that performs the welding to scan a three-dimensional region based on the shape of the scanning portion.

### ADVANTAGEOUS EFFECTS OF INVENTION

According to the present disclosure, a scanning operation teaching program for a sensor executed by a welding robot can be created more efficiently.

### BRIEF DESCRIPTION OF DRAWINGS

FIG. 1 is a schematic diagram showing a system configuration example of a welding system according to a first embodiment.
FIG. 2 is a diagram showing an internal configuration example of an inspection control device, a robot control device, a host device, and an offline teaching device according to the first embodiment.
FIG. 3 is a view showing an example of an effective scanning range of a sensor.
FIG. 4 is a view showing an example of an effective scanning region of the sensor.
FIG. 5 is a view showing an example of a 3D model.
FIG. 6 is a view showing a copy process example for an effective scanning region in the first embodiment.
FIG. 7 is a view showing a first deletion process example for the effective scanning region in the first embodiment.
FIG. 8 is a view showing a second deletion process example for the effective scanning region in the first embodiment.
FIG. 9 is a view showing a division process example for the effective scanning region in the first embodiment.
FIG. 10 is a view showing an example of various operations associated with the effective scanning region in the first embodiment.
FIG. 11 is a flowchart showing an operation procedure example of the offline teaching device according to the first embodiment.
FIG. 12 is a view showing a change process example and a rotation process example for an effective scanning region in a second embodiment.
FIG. 13 is a view showing a first change process example, a second change process example, and a third change process example for the effective scanning region.
FIG. 14 is a view showing an example of a model workpiece.
FIG. 15 is a view showing a copy process example for the effective scanning region in the second embodiment.
FIG. 16 is a view showing a rotation process example for the effective scanning region in the second embodiment.
FIG. 17 is a view showing an example of various operations associated with the effective scanning region in the second embodiment.

### DESCRIPTION OF EMBODIMENTS

### (Background of Present Disclosure)

A device configuration capable of constructing a virtual production facility using an offline teaching device as in Patent Literature 1 is known in the art. Such an offline teaching device can simultaneously display a part of the position detection commands corresponding to an operation trajectory of a welding robot and a part of welding commands, thereby making it easy for an operator to specify an editing portion at the time of creating a teaching program and supporting improvement on the creation efficiency and the accuracy of the created program.

In addition, in recent years, automation of appearance inspection, which is a quality verification method for a welding portion (that is, a weld bead), has been performed. The appearance inspection is executed by a welding robot or an inspection robot including a sensor capable of measuring a three-dimensional shape of a weld bead by scanning a workpiece with a laser beam. In the automation of the appearance inspection, a teaching operation for executing the appearance inspection using a sensor is performed by teaching a scanning range using a device that is visually recognizable by an operator with a weak output of a laser pointer or the like. However, since a scannable range of the sensor is not visualized during the teaching operation, the operator cannot know whether the taught scanning range is located within the actual scannable range of the sensor. Therefore, in a case where a teaching program created based on the teaching operation described above is used, the sensor may be not capable of reading the taught scanning range.

In addition, there is an offline teaching device that teaches a scanning portion in a virtual space. The offline teaching device visualizes a scannable range at a predetermined position in a horizontal direction (on an XY plane) to visualize the scanning portion taught by an operator and the scannable range by the sensor, and supports the teaching operation for executing the appearance inspection performed by an operator. However, it is difficult for the offline teaching device to visualize a three-dimensional scannable range (region) linked with an operation of the welding robot or the inspection robot including the sensor, and in a case where the appearance inspection is executed using the teaching program created using such an offline teaching device, there is a possibility that an appearance inspection target cannot be scanned in the taught scanning range. Therefore, the operator has to execute the appearance inspection using the created teaching program, or to correct the teaching portion based on a scanning result (appearance inspection result) of the sensor in the appearance inspection, and the like, which is very time-consuming.

Therefore, in the following embodiments, an example of an offline teaching device and an offline teaching method for more efficiently updating a welding operation teaching program or a scanning operation teaching program executed by a welding robot will be described.

Hereinafter, embodiments specifically disclosing an offline teaching device and an offline teaching method according to the present disclosure will be described in detail with reference to the drawings as appropriate. However, unnecessarily detailed descriptions may be omitted. For example, a detailed description of already well-known matters and a redundant description of substantially the same configuration may be omitted. This is to avoid unnecessary redundancy of the following description and to facilitate understanding of those skilled in the art. The accompanying drawings and the following description are provided for those skilled in the art to fully understand the present disclosure, and are not intended to limit the subject matter described in the claims.

Hereinafter, an object (for example, metal) subjected to main welding is defined as an "original workpiece", and an object produced (manufactured) by the main welding is defined as a "workpiece". The "workpiece" is not limited to a workpiece produced by the main welding executed once, and may be a composite workpiece produced by the main welding executed two or more times. In addition, a step of producing a workpiece by joining an original workpiece and another original workpiece to each other by a welding robot is defined as "main welding".

### (Configuration of Welding System)

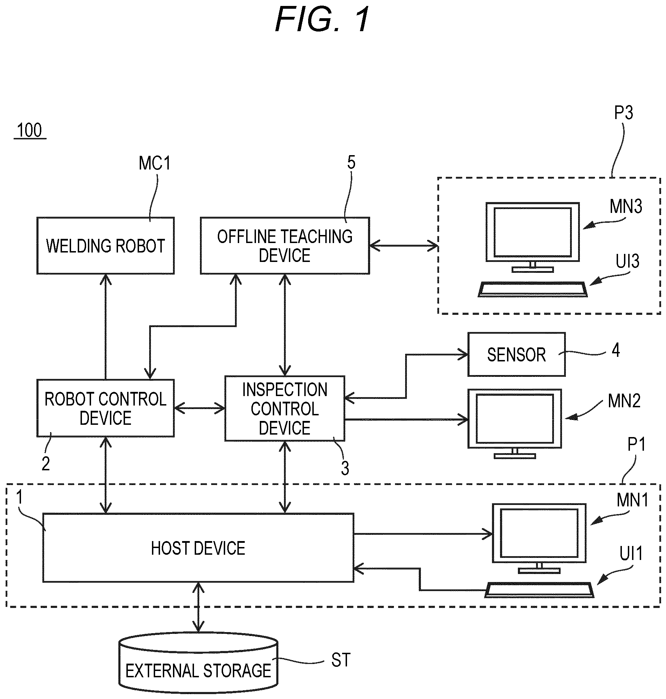

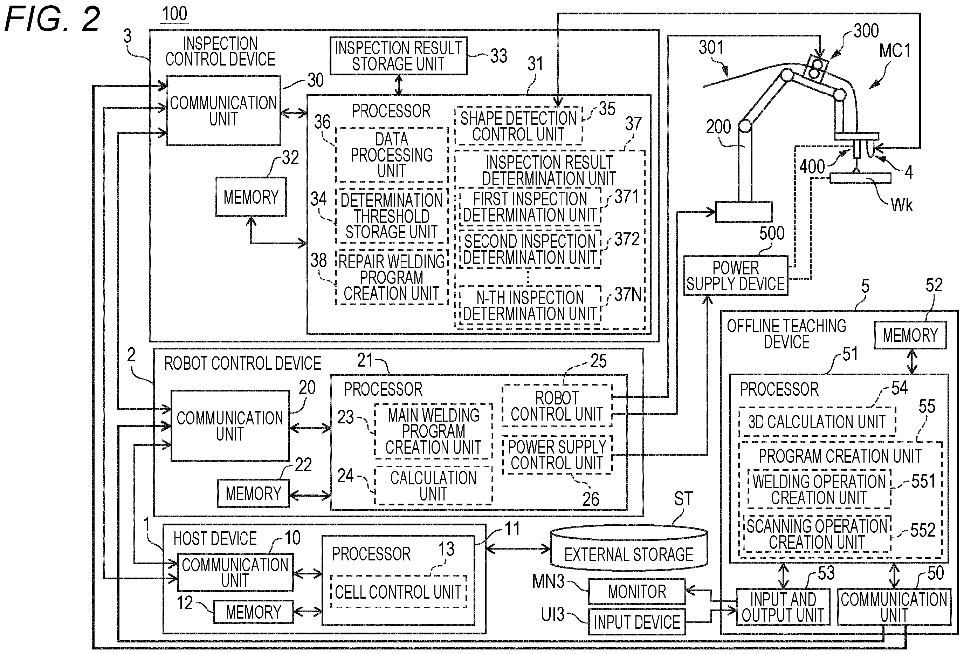

FIG. 1 is a schematic diagram showing a system configuration example of a welding system 100 according to a first embodiment. The welding system 100 is a configuration including a host device 1 connected to an external storage ST, an input interface UI1, and a monitor MN1, a robot control device 2, an inspection control device 3, a sensor 4, an offline teaching device 5, a monitor MN3, an input device UI3, a welding robot MC1, and a monitor MN2. In addition, in FIG. 1, the sensor 4 is illustrated as a separate body from the welding robot MC1, but may be provided integrally with the welding robot MC1 (see FIG. 2). The monitor MN2 is not an essential component and may be omitted.

The host device 1 integrally controls start and completion of main welding executed by the welding robot MC1 via the robot control device 2. For example, the host device 1 reads out, from the external storage ST, welding-related information input or set in advance by a user (for example, a welding operator or a system administrator. The same applies hereinafter.), generates a main welding execution command including contents of the welding-related information by using the welding-related information, and transmits the main welding execution command to the corresponding robot control device 2. When the main welding executed by the welding robot MC1 is completed, the host device 1 receives, from the robot control device 2, a main welding completion report indicating that the main welding executed by the welding robot MC1 is completed, updates to a status indicating that the corresponding main welding is completed, and records the status in the external storage ST.

The main welding execution command described above is not limited to being generated by the host device 1, and may be generated by, for example, an operation panel (for example, PLC: programmable logic controller) of equipment in a factory or the like where the main welding is executed, or an operation panel (for example, teach pendant) of the robot control device 2. The teach pendant is a device for operating the welding robot MC1 connected to the robot control device 2.

In addition, the host device 1 integrally controls start and completion of the bead appearance inspection using the robot control device 2, the inspection control device 3, and the sensor 4. For example, when the main welding completion report is received from the robot control device 2, the host device 1 generates a bead appearance inspection execution command for a workpiece produced by the welding robot MC1, and transmits the bead appearance inspection execution command to each of the robot control device 2 and the inspection control device 3. When the bead appearance inspection is completed, the host device 1 receives, from the inspection control device 3, an appearance inspection report indicating that the bead appearance inspection is completed, updates to a status indicating that the corresponding bead appearance inspection is completed, and records the status in the external storage ST.

Here, the welding-related information is information indicating contents of the main welding executed by the welding robot MC1, and is created in advance for each step of the main welding and is registered in the external storage ST. The welding-related information includes, for example, the number of original workpieces used in the main welding, workpiece information including an ID of the original workpiece used in the main welding, lot information, a name, and a welding portion of the original workpiece (for example, information on a welding line and position information on the welding line), a scheduled execution date on which the main welding is executed, the number of welded workpieces to be produced, and various welding conditions during the main welding. The welding-related information is not limited to data of the items described above, and may further include information such as created welding operation teaching program and scanning operation teaching program (see description below), and welding operation setting information, scanning operation setting information, and the like used to create the teaching programs.

In addition, the welding condition includes, for example, a material and a thickness of the original workpiece, a material and a wire diameter of a welding wire 301, a type of shielding gas, a flow rate of the shielding gas, a set average value of a welding current, a set average value of a welding voltage, a feeding speed and a feeding amount of the welding wire 301, the number of times of welding, and welding time. Further, in addition to the above, the welding condition may include, for example, information indicating a type of the main welding (for example, TIG welding, MAG welding, and pulse welding), a moving speed and a moving time of a manipulator 200.

Based on the main welding execution command transmitted from the host device 1, the robot control device 2 causes the welding robot MC1 to start execution of the main welding using an original workpiece designated by the execution command. The welding-related information described above is not limited to being managed by the host device 1 with reference to the external storage ST, and may be managed by, for example, the robot control device 2. In this case, since the robot control device 2 can know a state in which the main welding is completed, an actual execution date may be managed instead of the scheduled execution date, on which a welding step is scheduled to be executed, in the welding-related information. Although a type of the main welding is not limited in the present description, in order to make the description easy to understand, a step of joining a plurality of original workpieces to produce a workpiece will be described as an example.

The host device 1 is connected to the monitor MN1, the input interface UI1, and the external storage ST so as to allow data input and output, and is further connected to the robot control device 2 so as to allow data communication therebetween. The host device 1 may be a terminal device P1 that includes the monitor MN1 and the input interface UI1 in an integrated manner, and may further include the external storage ST in an integrated manner. In this case, the terminal device P1 is a personal computer (PC) that is used by the user before the main welding is executed. The terminal device P1 is not limited to the PC described above, and may be a computer device having a communication function, such as a smartphone or a tablet terminal.

The monitor MN1 may be formed using a display device such as a liquid crystal display (LCD) or an organic electroluminescence (EL). The monitor MN1 may display, for example, a screen showing a notification indicating that the main welding is completed or a notification indicating that the bead appearance inspection is completed, which is output from the host device 1. In addition, a speaker (not illustrated) may be connected to the host device 1 instead of the monitor MN1 or together with the monitor MN1, and the host device 1 may output, via the speaker, a sound of a content indicating that the main welding is completed or a content indicating that the bead appearance inspection is completed.

The input interface UI1 is a user interface that detects an input operation of the user and outputs the input operation to the host device 1, and may be formed using, for example, a mouse, a keyboard, or a touch panel. The input interface UI1 receives, for example, an input operation when the user creates the welding-related information or an input operation when the main welding execution command is transmitted to the robot control device 2.

The external storage ST is formed using, for example, a hard disk drive or a solid state drive. The external storage ST stores, for example, data of the welding-related information created for each main welding, a status of a workpiece Wk produced by the main welding (production status), and workpiece information of the workpiece Wk (see description above). The external storage ST may store, for each welding line, a welding operation teaching program and a scanning operation teaching program created by the offline teaching device 5. The welding operation teaching program and the scanning operation teaching program will be described later.

The robot control device 2 is connected to the host device 1, the inspection control device 3, and the offline teaching device 5 so as to allow data communication therebetween, and is connected to the welding robot MC1 so as to allow data communication therebetween. When the main welding execution command transmitted from the host device 1 is received, the robot control device 2 creates a main welding program based on the welding operation teaching program corresponding to the execution command, and controls the welding robot MC1 to execute the main welding. When it is detected that the main welding is completed, the robot control device 2 generates a main welding completion report indicating that the main welding is completed, and notifies the host device 1 of the main welding completion report. Accordingly, the host device 1 can appropriately detect the completion of the main welding by the robot control device 2. A method of detecting the completion of the main welding by the robot control device 2 may be, for example, a determination based on a signal indicating the completion of the main welding from a sensor (not illustrated) provided in a wire feeding device 300, or may be a known method, and contents of the method for detecting the completion of the main welding are not limited.

The welding robot MC1 is connected to the robot control device 2 so as to allow data communication therebetween. The welding robot MC1 executes the main welding commanded from the host device 1 under control of the corresponding robot control device 2. In addition, the welding robot MC1 moves the sensor 4 based on the scanning operation teaching program, thereby executing the bead appearance inspection commanded from the host device 1.

The inspection control device 3 is connected to the host device 1, the robot control device 2, the sensor 4, and the offline teaching device 5 so as to allow data communication therebetween. When the bead appearance inspection execution command transmitted from the host device 1 is received, the inspection control device 3 executes, together with the sensor 4, the bead appearance inspection on a welding portion (that is, a weld bead) of the workpiece Wk produced by the welding robot MC 1 (for example, inspection on whether the weld bead formed in the workpiece satisfies a predetermined welding standard) in accordance with the scanning operation teaching program for the corresponding workpiece Wk. The inspection control device 3 uses input data (for example, point cloud data capable of specifying a three-dimensional shape of the weld bead) related to a shape of the weld bead acquired by the sensor 4 to perform the bead appearance inspection based on comparison with master data of a non-defective workpiece predetermined for each workpiece as a result of the scanning operation. The bead appearance inspection executed by the welding robot MC1 in the first embodiment is not limited to the appearance inspection on the weld bead, and may be an inspection including the appearance inspection on the weld bead and another appearance inspection (for example, presence or absence of component attachment to the workpiece Wk). Accordingly, the operator can more efficiently utilize the effective scanning region of the sensor 4 and simultaneously perform the appearance inspections having different purposes based on an appearance inspection result. In addition, the effective scanning region referred to herein indicates a three-dimensional region in which the sensor 4 can read the appearance shape by scanning.

The inspection control device 3 performs the bead appearance inspection, generates an appearance inspection report including an inspection determination result of the bead appearance inspection and a notification indicating that the bead appearance inspection is completed, transmits the appearance inspection report to the host device 1, and outputs the appearance inspection report to the monitor MN2. When it is determined that a defect is detected in the bead appearance inspection on the workpiece, the inspection control device 3 generates an appearance inspection report including an appearance inspection result including information on a defective section for repairing and welding the defect, and transmits the appearance inspection report to the host device 1 and the robot control device 2. In addition, when it is determined that a defect is detected by the bead appearance inspection on the workpiece, the inspection control device 3 creates a repair welding program for performing correction such as repair of a defective portion using the appearance inspection result including the information on a defective section. The inspection control device 3 transmits the repair welding program and the appearance inspection result in association with each other to the host device 1 or the robot control device 2.

The sensor 4 is connected to the inspection control device 3 so as to allow data communication therebetween. The sensor 4 is installed in the welding robot MC1, and executes three-dimensional scanning of the workpiece Wk or a stage STG (see FIG. 2) on which the workpiece Wk is placed in accordance with driving of the manipulator 200 based on control of the robot control device 2. The sensor 4 acquires data of the three-dimensional shape of the workpiece Wk placed on the stage STG or data of the three-dimensional shape (for example, point cloud data) capable of specifying a shape, a size, a position, and the like of the stage STG on which the workpiece Wk is placed in accordance with the driving of the manipulator 200 based on the control of the robot control device 2, and transmits the data of the three-dimensional shape to the inspection control device 3.

The monitor MN2 may be formed using a display device such as an LCD or an organic EL. The monitor MN2 displays, for example, a screen showing a notification indicating that the bead appearance inspection is completed or the notification and a result of the bead appearance inspection, which is output from the inspection control device 3. In addition, a speaker (not illustrated) may be connected to the inspection control device 3 instead of the monitor MN2 or together with the monitor MN2, and the inspection control device 3 may output, via the speaker, a sound indicating a content of the notification indicating that the appearance inspection is completed or the notification and the bead appearance inspection result.

The offline teaching device 5 is connected to the robot control device 2, the inspection control device 3, the monitor MN3, and the input device UI3 so as to allow data communication therebetween. The offline teaching device 5 stores, as setting information, the position information of the welding line for each workpiece Wk that is to be created or that is created by the teaching program. In addition, the offline teaching device 5 constructs a virtual production facility (for example, a virtual welding robot, a virtual workpiece, or a virtual stage), and creates a welding operation teaching program and a scanning operation teaching program for the workpiece Wk based on a control command and various data transmitted from the input device UI3, various data output from the robot control device 2 or the inspection control device 3 (for example, input data related to a weld bead or a shape of the workpiece Wk, data of a 3D model, or position information of a welding line), or the like. The offline teaching device 5 transmits the created welding operation teaching program and scanning operation teaching program to the robot control device 2. The created scanning operation teaching program may be transmitted not only to the robot control device 2 but also to the inspection control device 3. In addition, the offline teaching device 5 stores the created welding operation teaching program and scanning operation teaching program for each workpiece Wk.

The position information of the welding line referred to herein is information indicating the position of the welding line formed in the workpiece Wk.

In addition, the welding operation teaching program referred to herein is a program that is created based on the welding line and that causes the welding robot MC1 to execute the main welding. The welding operation teaching program is created including information on a position, a distance, and an angle (orientation) of a welding torch 400 for executing various operations (for example, approach, retraction, avoidance, and welding) for subjecting the main welding to the workpiece Wk using the welding torch 400, and information on welding conditions and the like.

In addition, the scanning operation teaching program referred to herein is a program that is created based on the welding line and that causes the welding robot MC1 to execute the appearance inspection on at least one weld bead or the workpiece Wk created by the main welding. The scanning operation teaching program is created, using the sensor 4, including information on the position, the distance, and the angle (orientation) of the sensor 4 for executing various operations (for example, approach, retraction, avoidance, and scanning) for executing the appearance inspection on the created weld bead, workpiece Wk, and the like.

The monitor MN3 may be formed using a display device such as an LCD or an organic EL. The monitor MN3 displays an image of the virtual production facility (for example, a virtual welding robot, a virtual workpiece, and a virtual stage) transmitted from the offline teaching device 5, and displays an operation trajectory of the welding torch 400 based on the welding operation teaching program, an operation trajectory of the sensor 4 based on the scanning operation teaching program, and the like. In addition, the monitor MN3 displays an image in which the operation trajectory of the sensor 4 or the operation trajectory of the welding torch 400 is superimposed on the image of the virtual production facility transmitted from the offline teaching device 5.

The input device UI3 is a user interface that detects an input operation of the user and outputs the input operation to the host device 1, and may be formed using, for example, a mouse, a keyboard, or a touch panel. The input device UI3 receives input operations of position information, welding setting information, scanning setting information, the 3D model, and the like of the welding line of the workpiece Wk used for creating the scanning operation teaching program and the welding operation teaching program, input operations of the created scanning operation teaching program and welding operation teaching program, and the like. Here, the monitor MN3 and the input device UI3 as referred herein may be an integrally formed terminal device P3 (for example, a PC, a notebook PC, or a tablet terminal).

FIG. 2 is a diagram showing an internal configuration example of the inspection control device 3, the robot control device 2, the host device 1, and the offline teaching device 5 according to the first embodiment. In order to make the description easy to understand, illustration of the monitor MN1 and MN2 and the input interface UI1 is omitted in FIG. 2. The workpiece Wk shown in FIG. 2 is a workpiece to be subjected to the bead appearance inspection. The workpiece Wk may be a workpiece produced by the main welding, or a so-called repair workpiece that is repaired one or more times by repair welding. In addition, although the welding robot MC1 shown in FIG. 2 is a configuration including the sensor 4, the sensor 4 may be included in another robot (for example, an inspection robot for executing the appearance inspection or a repair welding robot for executing the repair welding).

Under the control of the robot control device 2, the welding robot MC1 executes a main welding step based on the welding operation teaching program using the welding torch 400, a bead appearance inspection step based on the scanning operation teaching program using the sensor 4, and the like. In addition, the welding robot MC1 may scan an appearance of the workpiece Wk using the sensor 4 in order to acquire the position information of the weld bead formed in the workpiece Wk and the appearance shape of the workpiece Wk used to create the welding operation teaching program and the scanning operation teaching program. The welding robot MC1 executes, for example, arc welding in the main welding step. However, the welding robot MC1 may execute welding (for example, laser welding and gas welding) other than the arc welding. In this case, although illustration is omitted, a laser head, instead of the welding torch 400, may be connected to a laser oscillator via an optical fiber. The welding robot MC1 is a configuration including at least the manipulator 200, the wire feeding device 300, a welding wire 301, and the welding torch 400.

The manipulator 200 includes an articulated arm, and moves each arm based on a control signal from a robot control unit 24 of the robot control device 2. Accordingly, the manipulator 200 can change a positional relation between the workpiece Wk and the welding torch 400 (for example, an angle of the welding torch 400 relative to the workpiece Wk) and a positional relation between the workpiece Wk and the sensor 4 by driving the arm.

The wire feeding device 300 controls a feeding speed of the welding wire 301 based on the control signal from the robot control device 2. The wire feeding device 300 may include a sensor (not illustrated) that can detect a remaining amount of the welding wire 301. Based on an output of the sensor, the robot control device 2 can detect that the main welding step is completed.

The welding wire 301 is held by the welding torch 400. When power is supplied from a power supply device 500 to the welding torch 400, an arc is generated between a distal end of the welding wire 301 and the workpiece Wk, and the arc welding is executed. Illustration and description of a configuration and the like for supplying shielding gas to the welding torch 400 are omitted for the convenience of description.

The host device 1 generates execution commands for various steps of the main welding or the bead appearance inspection by using the welding-related information input or set in advance by the user, and transmits the execution commands to the robot control device 2. As described above, when the sensor 4 is integrally attached to the welding robot MC1, the bead appearance inspection execution command is transmitted to both the robot control device 2 and the inspection control device 3. The host device 1 is a configuration including at least a communication unit 10, a processor 11, and a memory 12.

The communication unit 10 is connected to the robot control device 2 and the external storage ST so as to allow data communication therebetween. The communication unit 10 transmits, to the robot control device 2, the execution commands for various steps of the main welding or the bead appearance inspection generated by the processor 11. The communication unit 10 receives the main welding completion report and the appearance inspection report that are transmitted from the robot control device 2, and outputs the main welding completion report and the appearance inspection report to the processor 11. The main welding execution command may include, for example, a control signal for controlling each of the manipulator 200, the wire feeding device 300, and the power supply device 500 included in the welding robot MC1.

The processor 11 is formed by using, for example, a central processing unit (CPU) or a field programmable gate array (FPGA), and executes various processes and controls in cooperation with the memory 12. Specifically, the processor 11 functionally implements a cell control unit 13 by referring to a program stored in the memory 12 and executing the program.

The memory 12 includes, for example, a random access memory (RAM) as a work memory used when a process of the processor 11 is executed, and a read only memory (ROM) that stores a program that defines the process of the processor 11. Data generated or acquired by the processor 11 is temporarily stored in the RAM. The program that defines a process of the processor 11 is written into the ROM. In addition, the memory 12 stores the data of the welding-related information read out from the external storage ST, the status of the workpiece Wk, and data of the workpiece information of the workpiece Wk (see description below) transmitted from the robot control device 2.

The cell control unit 13 generates, based on the welding-related information stored in the external storage ST, an execution command for executing the main welding, the bead appearance inspection of the workpiece Wk, appearance scanning of the workpiece Wk, or the repair welding. In addition, the cell control unit 13 creates a main welding program at the time of main welding, an appearance inspection program related to driving of the welding robot MC 1 at the time of bead appearance inspection on the workpiece Wk, or an appearance scanning program related to driving of the welding robot MC1 at the time of appearance scanning based on the welding-related information stored in the external storage ST and the welding operation teaching program and the scanning operation teaching program which are created by the offline teaching device 5 and transmitted from the robot control device 2. Further, the cell control unit 13 creates an execution command for the created programs. The appearance inspection program and the appearance scanning program may be created for each workpiece Wk in advance and stored in the external storage ST, and in this case, the cell control unit 13 reads out and acquires various programs from the external storage ST. The cell control unit 13 may generate different execution commands for various steps of the main welding to be executed by the welding robot MC 1. The execution commands for the main welding appearance inspection and the appearance scanning generated by the cell control unit 13 are transmitted to the corresponding robot control device 2 or each of the robot control device 2 and the inspection control device 3 via the communication unit 10.

The robot control device 2 refers to a corresponding program based on the execution command for the main welding, the bead appearance inspection, or the appearance scanning that is transmitted from the host device 1. The robot control device 2 controls the welding robot MC1 (for example, the sensor 4, the manipulator 200, the wire feeding device 300, and the power supply device 500) based on the referred program. The robot control device 2 is a configuration including at least a communication unit 20, a processor 21, and a memory 22.

The communication unit 20 is connected to the host device 1, the inspection control device 3, the welding robot MC1, and the offline teaching device 5 so as to allow data communication therebetween. Although illustration is simplified in FIG. 2, data is transmitted and received between the robot control unit 24 and the manipulator 200, between the robot control unit 24 and the wire feeding device 300, and between a power supply control unit 25 and the power supply device 500 via the communication unit 20. The communication unit 20 receives the execution command for the main welding or the bead appearance inspection that is transmitted from the host device 1. The communication unit 20 receives the welding line position information, the welding operation teaching program, and the scanning operation teaching program transmitted from the offline teaching device 5. The communication unit 20 transmits the workpiece information of the workpiece Wk produced by the main welding to the host device 1.

Here, the workpiece information not only includes an ID of the workpiece Wk but also includes at least an ID, a name, and a welding portion of an original workpiece used in the main welding, and a welding condition at the time of executing the main welding.

The processor 21 is formed using, for example, a CPU or an FPGA, and executes various processes and controls in cooperation with the memory 22. Specifically, the processor 21 functionally implements a main welding program creation unit 23, the robot control unit 24, and the power supply control unit 25 by referring to a program stored in the memory 22 and executing the program. In addition, the processor 21 performs, based on a main welding program generated by the main welding program creation unit 23, calculation on a parameter for controlling the welding robot MC1 (specifically, each of the manipulator 200, the wire feeding device 300, and the power supply device 500) controlled by the robot control unit 24.

The memory 22 includes, for example, a RAM as a work memory used when a process of the processor 21 is executed, and a ROM that stores a program that defines the process of the processor 21. Data generated or acquired by the processor 21 is temporarily stored in the RAM. The program that defines the process of the processor 21 is written into the ROM. In addition, the memory 22 stores data of the execution command for the main welding or the bead appearance inspection that is transmitted from the host device 1, and the welding-related information in which the workpiece information of the workpiece Wk produced by the main welding and the position information of the welding line are associated with each other. The welding-related information including the workpiece information of the workpiece Wk to which the welding operation teaching program and the scanning operation teaching program are transmitted from the offline teaching device 5 may include the welding operation teaching program and the scanning operation teaching program, the position information of the welding line used to create the welding operation teaching program and the scanning operation teaching program, the welding operation setting information, and the scanning operation setting information.

The main welding program creation unit 23 creates a main welding program for the main welding to be executed by the welding robot MC1, based on the main welding execution command transmitted from the host device 1 via the communication unit 20, by using the workpiece information of each of the plurality of original workpieces included in the execution command (for example, an ID, a name, and a workpiece coordinate system of a workpiece, information of an original workpiece, and position information of a welding line) and the welding operation teaching program associated with the workpiece information. The main welding program may include various parameters such as a welding current, a welding voltage, an offset amount, a welding speed, and an orientation of the welding torch 400 for controlling the power supply device 500, the manipulator 200, the wire feeding device 300, the welding torch 400, and the like during the execution of the main welding. The main welding program may be stored in the processor 21 or may be stored in the RAM of the memory 22.

The robot control unit 24 generates a control signal for driving the welding robot MC1 (specifically, the sensor 4, the manipulator 200, the wire feeding device 300, and the power supply device 500) based on the main welding program generated by the main welding program creation unit 23. The robot control unit 24 transmits the generated control signal to the welding robot MC1.

In addition, the robot control unit 24 drives each of the manipulator 200 and the sensor 4 of the welding robot MC1 based on the appearance inspection program created using the scanning operation teaching program. Accordingly, the sensor 4 attached to the welding robot MC1 can move along with the operation of the welding robot MC1, scan the weld bead of the workpiece Wk to acquire input data related to the shape of the weld bead (for example, point cloud data capable of specifying the three-dimensional shape of the weld bead), and partially scan the workpiece Wk to acquire input data related to a partial shape of the workpiece Wk corresponding to other appearance inspection portions (for example, point cloud data capable of specifying the three-dimensional shape of the workpiece Wk corresponding to the other appearance inspection portions).

The power supply control unit 25 drives the power supply device 500 based on a calculation result of the main welding program generated by the main welding program creation unit 23.

The inspection control device 3 controls, based on the bead appearance inspection execution command transmitted from the host device 1, a process of the bead appearance inspection on the workpiece Wk produced by the main welding executed by the welding robot MC 1 or the workpiece Wk repaired by the repair welding executed one or more times. The bead appearance inspection is, for example, an inspection of whether a weld bead formed in the workpiece Wk satisfies a predetermined welding standard (for example, a welding quality standard required by each of the users), and is formed by the inspection determination described above. The inspection control device 3 determines (inspects) whether an appearance shape of the weld bead formed in the workpiece Wk satisfies a predetermined welding standard based on the input data related to the shape of the weld bead acquired by the sensor 4 (for example, point cloud data capable of specifying a three-dimensional shape of the weld bead). In addition, the inspection control device 3 transmits the input data related to the shape of the weld bead or the workpiece Wk acquired by the sensor 4 to the offline teaching device 5. The inspection control device 3 is a configuration including at least a communication unit 30, a processor 31, a memory 32, and an inspection result storage unit 33.

The communication unit 30 is connected to the host device 1, the robot control device 2, the sensor 4, and the offline teaching device 5 so as to allow data communication therebetween. Although illustration is simplified in FIG. 2, data is transmitted and received between a shape detection control unit 35 and the sensor 4 via the communication unit 30. The communication unit 30 receives the bead appearance inspection execution command transmitted from the host device 1. The communication unit 30 transmits an inspection determination result of the bead appearance inspection using the sensor 4 to the host device 1, and transmits three-dimensional shape data of the weld bead acquired by the sensor 4 to the offline teaching device 5.

The processor 31 is formed using, for example, a CPU or an FPGA, and executes various processes and controls in cooperation with the memory 32. Specifically, the processor 31 functionally implements a determination threshold storage unit 34, the shape detection control unit 35, a data processing unit 36, an inspection result determination unit 37, and a repair welding program creation unit 38 by referring to a program stored in the memory 32 and executing the program.

The memory 32 includes, for example, a RAM as a work memory used when the process of the processor 31 is executed, and a ROM that stores a program that defines the process of the processor 31. Data generated or acquired by the processor 31 is temporarily stored in the RAM. The program defining the process of the processor 31 is written into the ROM. In addition, the memory 32 may store the scanning operation teaching program transmitted from the offline teaching device 5 and the workpiece information in association with each other.

The inspection result storage unit 33 is formed using, for example, a hard disk or a solid state drive. The inspection result storage unit 33 stores data indicating a result of the bead appearance inspection of the welding portion of the workpiece Wk (for example, a workpiece or a repair workpiece) as an example of the data generated or acquired by the processor 31. The data indicating the result of the bead appearance inspection is generated by, for example, the inspection result determination unit 37 (specifically, any of a first inspection determination unit 371, a second inspection determination unit 372 to an N-th inspection determination unit 37N included in the inspection result determination unit 37).

The determination threshold storage unit 34 is formed by, for example, a cache memory provided in the processor 31, is set in advance by a user operation, and stores information of thresholds (for example, a threshold set for each type of welding failure) corresponding to the welding portion and the bead appearance inspection process of each of the first inspection determination unit 371 to the N-th inspection determination unit 37N included in the inspection result determination unit 37. The thresholds are, for example, an allowable range of a positional deviation of the weld bead, thresholds of a length, a height, and a width of the weld bead, and thresholds of perforation, pit, undercut, and sputtering. In addition, the determination threshold storage unit 34 may store, as the thresholds during the bead appearance inspection after repair welding, an allowable range that satisfies a minimum welding standard (quality) required by a customer or the like (for example, a minimum allowable value or a maximum allowable value). The thresholds are used in a process of determining whether inspection results created by the first inspection determination unit 371 and the second inspection determination unit 372 to the Nth inspection determination unit 37N included in the inspection result determination unit 37 are acceptable for the bead appearance inspection. Further, the determination threshold storage unit 34 may store an upper limit value of the number of bead appearance inspections for each welding portion. Accordingly, in a case where the number of times at the time of correcting a defective portion by the repair welding exceeds a predetermined upper limit value, the inspection control device 3 determines that the correction on the defective portion by the automatic repair welding by the welding robot MC1 is difficult or impossible, and can suppress a decrease in an operation rate of the welding system 100.

The shape detection control unit 35 acquires the input data (for example, point cloud data capable of specifying the three-dimensional shape of the weld bead) related to the shape of the weld bead acquired and transmitted by the sensor 4 based on the bead appearance inspection execution command for the welding portion of the workpiece Wk (for example, the workpiece or the repair workpiece) transmitted from the host device 1. In addition, the shape detection control unit 35 acquires the input data (for example, point cloud data capable of specifying the three-dimensional shape of the workpiece Wk) related to the shape of the workpiece Wk acquired and transmitted by the sensor 4 based on the appearance scanning execution command for the workpiece Wk transmitted from the host device 1. Specifically, when the sensor 4 reaches a position where the weld bead or the workpiece Wk can be imaged (in other words, a position where the three-dimensional shape of the welding portion or the workpiece Wk can be detected) in accordance with the driving of the manipulator 200 by the robot control device 2 described above, the shape detection control unit 35 causes the sensor 4 to emit, for example, a laser beam to acquire the input data related to the shape of the weld bead or the workpiece Wk. When the input data (see description above) acquired by the sensor 4 is received, the shape detection control unit 35 transmits the input data to the data processing unit 36.

When the input data (see description above) related to the shape of the weld bead is received from the shape detection control unit 35, the data processing unit 36 converts the input data into a data format suitable for first inspection determination by the inspection result determination unit 37, and converts the input data into a data format suitable for each of second inspection determination to N-th inspection determination by the inspection result determination unit 37. The conversion of the data format may include a correction process of removing unnecessary point cloud data (for example, noise) included in the input data (that is, point cloud data) as a so-called preprocess, and the above-described preprocess may be omitted for the first inspection determination. The data processing unit 36 generates image data indicating the three-dimensional shape of the weld bead by setting a data format suitable for the first inspection determination and executing a statistical process on the input shape data, for example. The data processing unit 36 may perform edge enhancement correction in which a peripheral portion of the weld bead is enhanced in order to enhance the position and the shape of the weld bead as data for the first inspection determination. The data processing unit 36 may count the number of times the bead appearance inspection is executed for each welding failure portion, and determine that it is difficult or impossible to correct the welding failure portion caused by automatic repair welding in a case where a welding inspection result is not favorable even when the number of times of the bead appearance inspection exceeds the number of times stored in advance in the memory 32. In this case, the inspection result determination unit 37 generates an alert screen including a position of the welding failure portion and a type of the welding failure (for example, perforation, pit, undercut, sputtering, or projection), and transmits the generated alert screen to the host device 1 via the communication unit 30. The alert screen transmitted to the host device 1 is displayed on the monitor MN1. The alert screen may be displayed on the monitor MN2.

The data processing unit 36 uses the threshold for bead appearance inspection stored in the determination threshold storage unit 34 to execute the bead appearance inspection based on comparison between the input data related to the shape of the weld bead acquired by the sensor 4 and the master data of a non-defective workpiece predetermined for each workpiece in advance. The data processing unit 36 creates an appearance inspection report including a defect determination result as an inspection determination result (that is, information indicating presence or absence of a defect that requires repair welding) and information on a defective segment for each defective portion and stores the appearance inspection report in the inspection result storage unit 33, and transmits the appearance inspection report to the host device 1 or the robot control device 2 via the communication unit 30. In addition, when it is determined that there is no defective portion that requires repair welding in the workpiece Wk to be inspected, the data processing unit 36 creates an appearance inspection report including an inspection determination result indicating that the result is acceptable for the bead appearance inspection and stores the appearance inspection report in the inspection result storage unit 33, and transmits the appearance inspection report to the host device 1 via the communication unit 30.

In addition, when the input data (see description above) related to the shape of the workpiece Wk is acquired from the shape detection control unit 35, the data processing unit 36 converts the input data into a data format suitable for the calculation process executed by the offline teaching device 5. The conversion of the data format may include, as a so-called preprocess, a correction process of removing unnecessary point cloud data (for example, noise) included in the input data (that is, point cloud data), or may be a process of generating a 3D model of the workpiece Wk. In addition, the data processing unit 36 may perform edge enhancement correction in which the position and the shape of the workpiece Wk are enhanced and the peripheral portion of the workpiece Wk is enhanced. The data processing unit 36 transmits the input data related to the shape of the workpiece Wk after conversion to the offline teaching device 5 via the communication unit 30.

The inspection result determination unit 37 may execute a total of N (N is an integer of 2 or more) types of bead appearance inspection (for example, each of the first inspection determination and the second inspection determination described above). Specifically, the inspection result determination unit 37 includes the first inspection determination unit 371 and the second inspection determination unit 372 to the N-th inspection determination unit 37N. Although the description will be made assuming that N = 2 in order to facilitate understanding of the description in FIG. 2, the same applies to an integer of N = 3 or more.

The first inspection determination unit 371 performs the first inspection determination (that is, the bead appearance inspection based on comparison between the input data related to the shape of the weld bead acquired by the sensor 4 and the master data of the non-defective workpiece predetermined for each workpiece), and inspects the shape reliability of the weld bead (for example, whether the weld bead is along a straight or curved welding line), the bead crack, and the bead positional deviation. The first inspection determination unit 371 performs comparison (so-called image processing) between the master data of the non-defective workpiece and the data (for example, image data generated based on the point cloud data) subjected to the data conversion by the data processing unit 36 for the first inspection determination. Therefore, the first inspection determination unit 371 can inspect the shape reliability of the weld bead, the bead crack, and the bead positional deviation with high accuracy. The first inspection determination unit 371 calculates an inspection score indicating an inspection result of the shape reliability of the weld bead, the bead crack, and the bead positional deviation, and creates a calculated value of the inspection score as a first inspection result. Further, the first inspection determination unit 371 compares the created first inspection result with a threshold for the first inspection result stored in the memory 32. The first inspection determination unit 371 outputs the first inspection result including information on a comparison result (that is, whether the acquired first inspection result is acceptable or unacceptable for the bead appearance inspection) to a comprehensive determination unit 370 or the second inspection determination unit 372 to the N-th inspection determination unit 37N.

The second inspection determination unit 372 to the N-th inspection determination unit 37N respectively execute the second inspection determination (that is, the bead appearance inspection of forming a neural network by each of k = (N-1) types of artificial intelligence and determining presence or absence of a welding failure based on AI for the input data related to the shape of the weld bead acquired by the sensor 4 or the input data after preprocessing the input data by the data processing unit 36), and inspect presence or absence of perforation, pit, undercut, sputtering, and projection of the weld bead. Perforation, pit, undercut, sputtering, and projection of the weld bead are merely exemplified, and the defect type inspected by the N-th inspection determination unit 37N is not limited thereto. When it is determined that the welding failure of the corresponding type is detected, each of the second inspection determination unit 372 to the N-th inspection determination unit 37N specifies the position of the weld bead at which the welding failure is detected. Each of the second inspection determination unit 372 to the N-th inspection determination unit 37N determines presence or absence of a welding failure using a learning model (AI) obtained in advance by a learning process for each type of welding failure or each group of types of welding failure. Accordingly, each of the second inspection determination unit 372 to the N-th inspection determination unit 37N can inspect, for example, the presence or absence of perforation, pit, undercut, sputtering, and projection of the weld bead with high accuracy. Each of the second inspection determination unit 372 to the N-th inspection determination unit 37N does not execute the inspection on the shape reliability of the weld bead, the bead crack, and the bead positional deviation executed by the first inspection determination unit 371. The second inspection determination unit 372 to the N-th inspection determination unit 37N calculate an inspection result (in other words, an inspection score indicating the occurrence probability) of the perforation, the pit, the undercut, the sputtering, and the projection of the weld bead, and create a calculated value of the inspection score as the second inspection determination result.

The inspection result determination unit 37 may determine whether the repair welding by the welding robot MC1 is possible (in other words, whether the repair welding by the welding robot MC1 is favorable or manual repair welding is favorable) based on the inspection result (inspection score) included in the first inspection result or the second inspection result described above, and output the determination result included in the appearance inspection report described above.

The repair welding program creation unit 38 creates a repair welding program for the workpiece Wk to be executed by the welding robot MC1 by using the appearance inspection report of the workpiece Wk by the data processing unit 36. The repair welding program may include various parameters such as a welding current, a welding voltage, an offset amount, a welding speed, and an orientation of the welding torch 400 for controlling the power supply device 500, the manipulator 200, the wire feeding device 300, the welding torch 400, and the like during the execution of the repair welding. The generated repair welding program may be stored in the processor 31, may be stored in the RAM of the memory 32, or may be transmitted to the host device 1 or the robot control device 2 via the communication unit 30 in association with the appearance inspection report.

The repair welding program creation unit 38 creates a repair welding program of the workpiece Wk (for example, a workpiece or a repair workpiece) to be executed by the welding robot MC1 using the appearance inspection report of the workpiece Wk (for example, a workpiece or a repair workpiece) by the inspection result determination unit 37 and the workpiece information (for example, information such as coordinates indicating a position of a detection point of a welding failure of the workpiece or the repair workpiece). The repair welding program may include various parameters such as a welding current, a welding voltage, an offset amount, a welding speed, and an orientation of the welding torch 400 for controlling the power supply device 500, the manipulator 200, the wire feeding device 300, the welding torch 400, and the like during the execution of the repair welding. The generated repair welding program may be stored in the processor 31 or may be stored in the RAM of the memory 32.

The sensor 4 is, for example, a three-dimensional shape sensor, is attached to a distal end of the welding robot MC1, and acquires a plurality of pieces of point cloud data capable of specifying the shape of the workpiece Wk or the welding portion on the workpiece Wk. The sensor 4 generates point cloud data capable of specifying the three-dimensional shape of the welding portion based on the acquired point cloud data, and transmits the point cloud data to the inspection control device 3. When the sensor 4 is not attached to the distal end of the welding robot MC1 and is disposed separately from the welding robot MC1, the sensor 4 may include a laser light source (not illustrated) configured to scan the workpiece Wk or a welding portion of the workpiece Wk (for example, a workpiece or a repair workpiece) based on the position information of the workpiece Wk or the welding portion transmitted from the inspection control device 3, and a camera (not illustrated) that is disposed in a manner of capable of imaging an imaging region including a periphery of the workpiece Wk or the welding portion and that images a reflection trajectory (that is, shape lines of the welding portion) of reflected laser light among laser light emitted onto the workpiece Wk or the welding portion. In this case, the sensor 4 transmits, to the inspection control device 3, the shape data of the workpiece Wk or the welding portion (in other words, the image data of the workpiece Wk or the weld bead) based on the laser light imaged by the camera. The camera described above includes at least a lens (not illustrated) and an image sensor (not illustrated). The image sensor is, for example, a solid-state imaging element such as a charge coupled device (CCD) or a complementary metal oxide semi-conductor (CMOS), and converts an optical image formed on an imaging surface into an electric signal.

The offline teaching device 5 is connected to the robot control device 2, the inspection control device 3, the monitor MN3, and the input device UI3 so as to allow data communication therebetween. The offline teaching device 5 creates a welding operation teaching program and a scanning operation teaching program of the workpiece Wk based on the position information of the welding line and various data such as the position information of the welding line, the welding operation setting information, and the scanning operation setting information transmitted from the input device UI3. The offline teaching device 5 includes a communication unit 50, a processor 51, a memory 52, and an input and output unit 53.

Although the offline teaching device 5 according to the first embodiment is described as an example in which the welding operation teaching program and the scanning operation teaching program are created, the creation of the welding operation teaching program is not essential and may be omitted. The offline teaching device 5 includes the sensor 4, and may be capable of creating a scanning operation teaching program for a robot capable of executing a scanning operation (that is, bead appearance inspection) by the sensor 4.

The communication unit 50 is connected to the robot control device 2, the inspection control device 3, the input device UI3, and the monitor MN3 so as to allow data communication therebetween. The communication unit 50 transmits, to the robot control device 2, the created welding operation teaching program and scanning operation teaching program and various data (for example, position information of the welding line, welding operation setting information, scanning operation setting information, and workpiece information of the workpiece Wk) used for creating the welding operation teaching program and the scanning operation teaching program in association with each other.

The processor 51 is formed using, for example, a CPU or an FPGA, and executes various processes and controls in cooperation with the memory 52. Specifically, the processor 51 functionally implements a 3D calculation unit 54 and a program creation unit 55 by referring to the program stored in the memory 52 and executing the program.

The memory 52 includes, for example, an RAM as a work memory used when a process of the processor 51 is executed, and an ROM that stores a program defining the process of the processor 51. Data generated or acquired by the processor 51 is temporarily stored in the RAM. The program defining the process of the processor 51 is written into the ROM. In addition, the memory 52 stores the welding operation teaching program, the scanning operation teaching program, and the workpiece information, which are created by the program creation unit 55, in association with one another.

The input and output unit 53 as an example of the input unit and the acquisition unit acquires the execution command, the 3D model of the workpiece Wk, the welding operation setting information, and the scanning operation setting information, which are transmitted from the input device UI3, and the position information of the welding line transmitted from the robot control device 2, the inspection control device 3, or the input device UI3, and outputs the acquired information to the processor 51. In addition, the input and output unit 53 transmits, to the monitor MN3, an image in which the operation trajectory of the sensor 4 or the operation trajectory of the welding torch 400 is superimposed on an image of a virtual production facility (for example, a virtual welding robot, a virtual workpiece, or a virtual stage) generated by the 3D calculation unit 54 and an image of a virtual production facility transmitted from the offline teaching device 5.

The 3D calculation unit 54 as an example of a generation unit virtually forms a production facility necessary for executing the main welding step and the appearance inspection step of the workpiece Wk based on, for example, the input data (that is, data of a three-dimensional shape) related to the shape of the workpiece Wk or the weld bead, the data of a 3D model of the workpiece Wk, the workpiece information of the workpiece Wk, and the data related to a production facility (for example, position information of the stage STG or the robot information or the position information of the welding robot MC1). The 3D calculation unit 54 converts the data of the virtually formed production facility into image data, outputs the image data to the input and output unit 53, and displays the image data on the monitor MN3.

In addition, the 3D calculation unit 54 generates image data in which one or more teaching points included in the welding operation teaching program created by the program creation unit, the operation trajectory (specifically, an idling section, a welding section, and the like) of the welding torch 400, and the like are virtually superimposed on the production facility. The 3D calculation unit 54 generates image data in which one or more teaching points included in the scanning operation teaching program created by the program creation unit, the operation trajectory of the sensor 4 (specifically, an operation trajectory indicating various operations such as an approach operation, a retraction operation, and an avoidance operation, an idling section, a scanning section, and the like), and the like are virtually superimposed on the production facility. The 3D calculation unit 54 converts data of a virtual production facility on which data included in various teaching programs is superimposed into image data, outputs the image data to the input and output unit 53, and displays the image data on the monitor MN3. The 3D calculation unit 54 may generate image data in which the teaching points of the welding operation and the scanning operation, the operation trajectories of the welding torch 400 and the sensor 4 (specifically, an idling section, a welding section, a scanning section, and the like), and the like are collectively superimposed on a virtual production facility based on the welding operation teaching program and the scanning operation teaching program.

The program creation unit 55 as an example of the control unit creates the welding operation teaching program and the scanning operation teaching program based on the position information of the welding line (for example, data of the 3D model of the workpiece Wk, the input data related to the shape of the workpiece Wk or the welding bead, and coordinate information of a start point and an end point of the welding line), the welding operation setting information, and the scanning operation setting information. The program creation unit 55 includes a welding operation creation unit 551 and a scanning operation creation unit 552.

The welding operation creation unit 551 creates a welding operation teaching program for executing the main welding step on the workpiece Wk based on the input position information of the welding line and the welding operation setting information. In addition, the welding operation setting information referred to herein may be a group of various parameters necessary for the welding operation, such as various welding conditions of the main welding, and retreat positions of the welding torch 400 before the start of welding and after the end of welding.

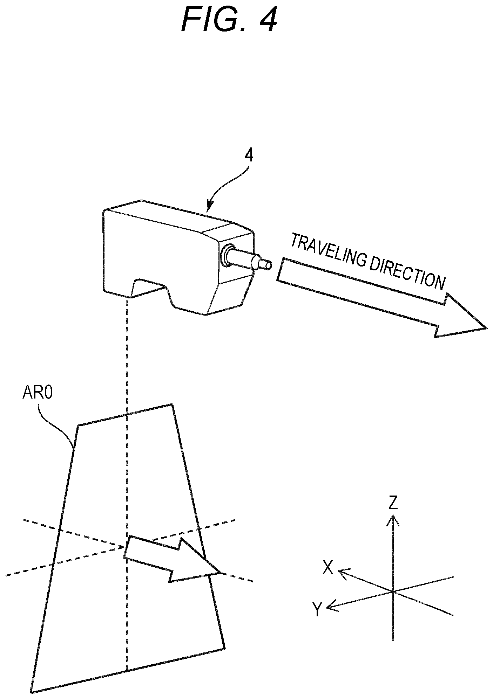

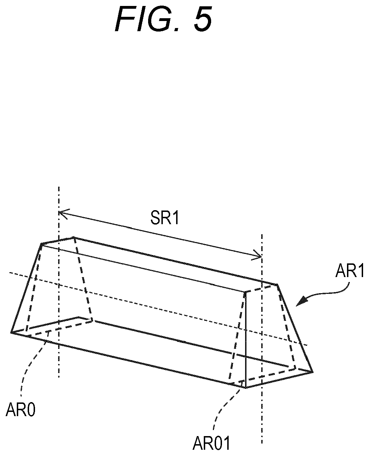

The scanning operation creation unit 552 creates a scanning operation teaching program for executing an appearance inspection step on the weld bead or another appearance inspection portion generated on the workpiece Wk based on the scanning operation setting information such as the input operation trajectory of the welding operation, the position information of the welding line, the 3D model, and one or more effective scanning regions disposed on the 3D model. In addition, the scanning operation setting information referred to herein may be a group of various parameters necessary for the scanning operation on the weld bead or other appearance inspection targets such as a distance between the sensor 4 and the workpiece Wk, information of the sensor 4 (for example, an effective scanning range ARC (see FIG. 4) or an effective scanning region AR1 (see FIG. 5)), a measurement range, approach information (for example, information of an approach start position and an approach end position or instruction information for commanding an approach), a scanning run-up section, a scanning section, retraction information (for example, information of a retraction start position and a retraction end position, or instruction information for commanding retraction), avoidance information (for example, information of an avoidance start position and an avoidance end position, position information of an original workpiece or a jig which is an obstacle to be avoided).

Hereinafter, various methods for creating a scanning section to be scanned by the sensor 4 in the process of creating the scanning operation teaching program will be described. The offline teaching device 5 creates a new scanning operation teaching program based on the operator operation acquired via the input device UI3 and the welding operation teaching program or the scanning operation teaching program already created for the same or another workpiece.

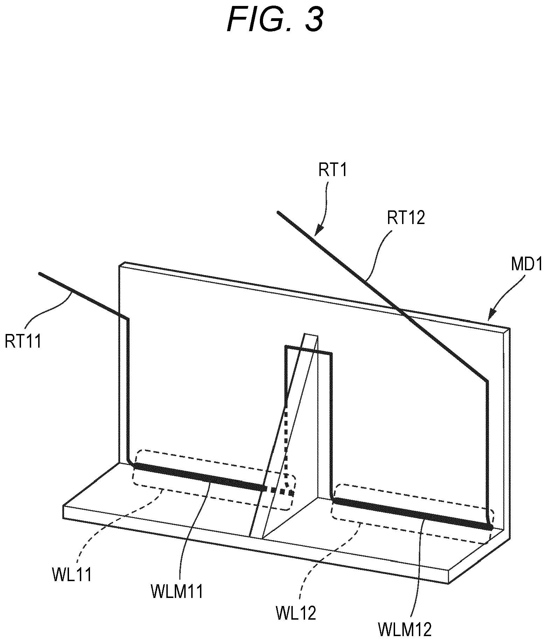

First, a 3D model MD1 will be described with reference to FIG. 3. FIG. 3 is a view showing an example of the 3D model MD1. The workpiece Wk indicated by the 3D model MD1 in FIG. 3 is an example and is not limited thereto.

The offline teaching device 5 acquires the data of the 3D model, and the welding operation teaching program and the scanning operation teaching program of the workpiece Wk, which are to be created by the new scanning operation teaching program, from the robot control device 2, the inspection control device 3, and the input device UI3, respectively, based on an operator operation. Specifically, first, the offline teaching device 5 acquires the operation trajectory of the welding operation of the workpiece Wk to be created by the scanning operation teaching program (that is, the operation trajectory of the welding torch 400 at the time of the main welding), the data of the 3D model of the workpiece Wk to be subjected to the bead appearance inspection (that is, the data of the three-dimensional shape of the workpiece Wk), and the information of the effective scanning range ARC of the sensor 4 (for example, the three-dimensional information such as the range information of the effective scanning range ARC and the distance information between the sensor 4 and the effective scanning range AR0).

The offline teaching device 5 superimposes an operation trajectory RT1 of the welding operation on the acquired data of the 3D model MD1 of the workpiece Wk. The offline teaching device 5 generates an image (that is, FIG. 3) in which the acquired operation trajectory RT1 of the welding operation and each of scanning sections WL11 and WL12 or each of welding lines WLM11 and WLM12 are superimposed on the 3D model MD1 of the workpiece Wk, transmits the image to the monitor MN3, and displays the image. Accordingly, the offline teaching device 5 can present, to the operator in a visually recognizable manner, each of idle operation sections RT11 and RT12, each of the scanning sections WL11 and WL12, or a welding section indicated by each of the welding lines WLM11 and WLM12 at the time of the bead appearance inspection on the workpiece Wk based on the 3D model MD1 on which the operation trajectory RT1 of the welding operation is superimposed.

The offline teaching device 5 may omit acquisition of the position information of the welding line in order to create the scanning operation teaching program. The offline teaching device 5 may acquire at least the data of the 3D model MD1 of the workpiece Wk and the operation trajectory RT1 of the welding operation. Accordingly, the offline teaching device 5 can acquire various operation information (for example, information on an approach operation, a retraction operation, or an avoidance operation) related to the welding operation associated with the operation trajectory RT1 of the welding operation. In a case where the avoidance operation is unnecessary, the information related to the avoidance operation may be omitted.

The acquisition of the scanning operation teaching program is not essential and may be omitted. In such a case, the offline teaching device 5 executes a generation process for an effective scanning region of the sensor 4, which will be described later, based on an operator operation. In addition, the offline teaching device 5 may execute a generation process for a new effective scanning region based on an operator operation. The generation process for an effective scanning region will be described with reference to FIGS. 4 and 5.

FIG. 4 is a view showing an example of the effective scanning range ARC of the sensor 4. FIG. 5 is a view showing an example of the effective scanning region AR1 of the sensor 4. It is needless to say that each of the effective scanning range ARC shown in FIG. 4 and the effective scanning region AR1 shown in FIG. 5 is an example, and is not limited thereto.

The effective scanning range ARC shown in FIG. 4 is a range in which the sensor 4 can scan a three-dimensional shape of an object (for example, a weld bead to be subjected to the bead appearance inspection) on a YZ plane. The sensor 4 is moved in a traveling direction by driving of the manipulator 200 of the welding robot MC1 to scan and acquire the three-dimensional shape of the object located in the effective scanning region AR1 shown in FIG. 4.

The offline teaching device 5 receives an operator operation for the effective scanning range ARC of the sensor 4 and generates the effective scanning region AR1. Specifically, the offline teaching device 5 receives an operator operation of moving the effective scanning range ARC on the YZ plane in any one direction readable by the sensor 4 included in the welding robot MC1. The offline teaching device 5 generates the effective scanning region AR1 based on the direction in which the movement operation is performed by the operator and a section of the movement operation (that is, a distance between a movement start position and a movement end position).

For example, when an operator operation of moving the effective scanning range ARC in the traveling direction (that is, a direction substantially perpendicular to the YZ plane) by the scanning section SR1 is received, the offline teaching device 5 generates the effective scanning region AR1 from the effective scanning range ARC to an effective scanning range AR01 located at the distance of the scanning section SR1.

When information (for example, the position, the three-dimensional shape, the size, and the angle of the effective scanning region) of one or more effective scanning regions is associated with the acquired 3D model MD1 or a teaching program for scanning teaching, the offline teaching device 5 according to the first embodiment may receive an editing operation such as copy (duplication), deletion, or division of any effective scanning region among the one or more effective scanning regions.

In addition, as described above, the offline teaching device 5 according to the first embodiment may receive an operator operation via the input device UI3 and execute generation of one effective scanning region having any size and angle. In such a case, the offline teaching device 5 receives an operation such as copy (duplication) or deletion of the generated one effective scanning region. In addition, in such a case, even when the information of the one or more effective scanning regions (for example, the position, the three-dimensional shape, the size, and the angle of the effective scanning region) is not associated with the acquired 3D model MD1 or the teaching program for scanning teaching, the offline teaching device 5 can create a new scanning operation teaching program by generating an effective scanning region based on an operator operation.

As described above, the offline teaching device 5 according to the first embodiment creates a new scanning operation teaching program based on each of the effective scanning regions generated based on an operator operation or the edited effective scanning regions, the operation trajectory of the welding operation, and the 3D model MD1 of the workpiece Wk.

### <Copy Process for Effective Scanning Region>

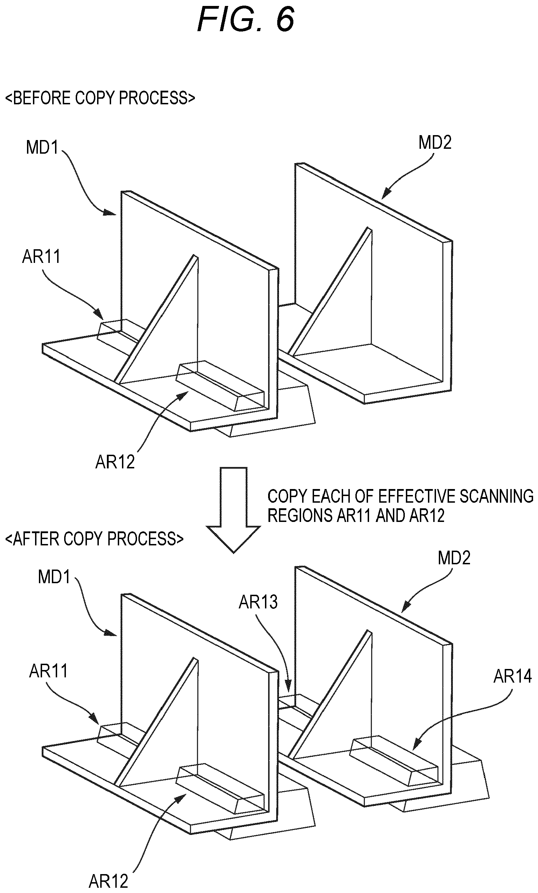

A copy process for an effective scanning region in the first embodiment will be described with reference to FIG. 6. FIG. 6 is a view showing a copy process example for the effective scanning regions AR11 and AR12 in the first embodiment.

Here, the effective scanning region AR11 shown in FIG. 6 is an effective scanning region corresponding to the scanning section WL11 of the welding line WLM11 shown in FIG. 3. The effective scanning region AR11 indicates a region that can be scanned by the sensor 4 when the weld bead formed based on the welding line WLM11 is scanned. Similarly, the effective scanning region AR12 shown in FIG. 6 is an effective scanning region corresponding to the scanning section WL12 of the welding line WLM12 shown in FIG. 3. The effective scanning region AR12 indicates a region that can be scanned by the sensor 4 when the weld bead formed based on the welding line WLM12 is scanned. It is needless to say that each of the two effective scanning regions AR11 and AR12 is an example, and is not limited thereto.

The copy process for an effective scanning region is useful for teaching a scanning operation of a workpiece including two or more workpieces having the same shape. In addition, the copy process for an effective scanning region is useful for teaching a scanning operation which is used for executing an appearance inspection (for example, an inspection for determining presence or absence of a component (screw or the like) attached to the workpiece) other than the welding portion.

In a case where the workpiece to be created by the scanning operation teaching program is a workpiece including two or more workpieces having the same shape, the offline teaching device 5 receives input of data of a 3D model of the workpiece (for example, in the example shown in FIG. 6, data of one 3D model in which a relative position between the 3D model MD1 and the 3D model MD2 is defined). The offline teaching device 5 may acquire the data of the 3D model of the workpiece to be created by the scanning operation teaching program by copying (duplicating) the 3D model MD1 and receiving an operation of defining the relative position between the 3D model MD1 and the 3D model MD2.

In a case where a control command requesting the copy process for an effective scanning region is transmitted from the input device UI3, the offline teaching device 5 copies (duplicates) one or more effective scanning regions (here, the two effective scanning regions AR11 and AR12) designated by an operator operation. The offline teaching device 5 disposes a plurality of copied (duplicated) effective scanning regions AR13 and AR14 at designated positions based on an operator operation acquired via the input device UI3, respectively.

Here, in a case where the designated position based on an operator operation is acquired via the input device UI3, the offline teaching device 5 specifies the position of the welding robot MC1 corresponding to the designated position based on an operation trajectory of the welding robot MC1. The offline teaching device 5 calculates a position and an orientation of the sensor 4 included in the welding robot MC1 at the specified position of the welding robot MC1, and calculates a position and an angle (direction) of the effective scanning region of the sensor 4 at the designated position based on the calculated position and orientation of the sensor 4. The offline teaching device 5 generates an image in which an effective scanning region is superimposed and displayed on the 3D model MD1 based on the calculated position and angle (direction) of the effective scanning region. The offline teaching device 5 transmits the generated image to the monitor MN3 and displays the image. Accordingly, the offline teaching device 5 can visualize, to the operator, the effective scanning region (for example, four effective scanning regions AR11 to AR14 superimposed on the corresponding 3D models MD1 and MD2 after the copy process shown in FIG. 6) based on the operation trajectory of the welding robot MC1.

As described above, the offline teaching device 5 can superimpose, on the 3D model MD1, the effective scanning region corresponding to the position and the orientation of the sensor 4 at the designated position based on the position of the welding robot MC1 corresponding to the operation trajectory of the welding robot MC1. Therefore, the offline teaching device 5 according to the first embodiment can further reduce a deviation between the effective scanning region of the sensor 4 when the welding robot MC1 is actually operated and a virtual effective scanning region constructed by the offline teaching device 5. Accordingly, the offline teaching device 5 can present, to the operator, the effective scanning region that can be scanned by the sensor 4 at the time of operation, and thus can efficiently support the teaching operations by the operator. In addition, the offline teaching device 5 can further improve the scanning accuracy for a teaching portion (that is, an effective scanning region) at the time of operation and can more efficiently reduce a load required for a teaching operation such as correction on a teaching portion (effective scanning region) by presenting, to the operator, the effective scanning region that can be scanned by the sensor 4 at the time of operation.

### <Deletion process for Effective Scanning Region >

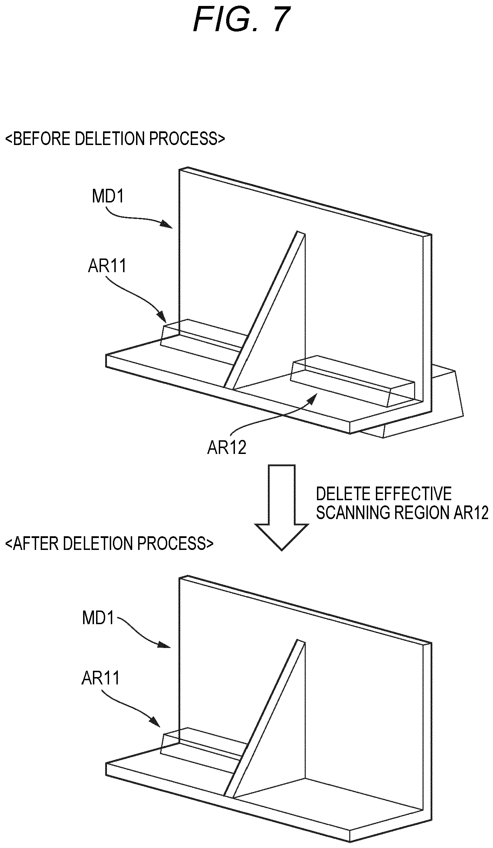

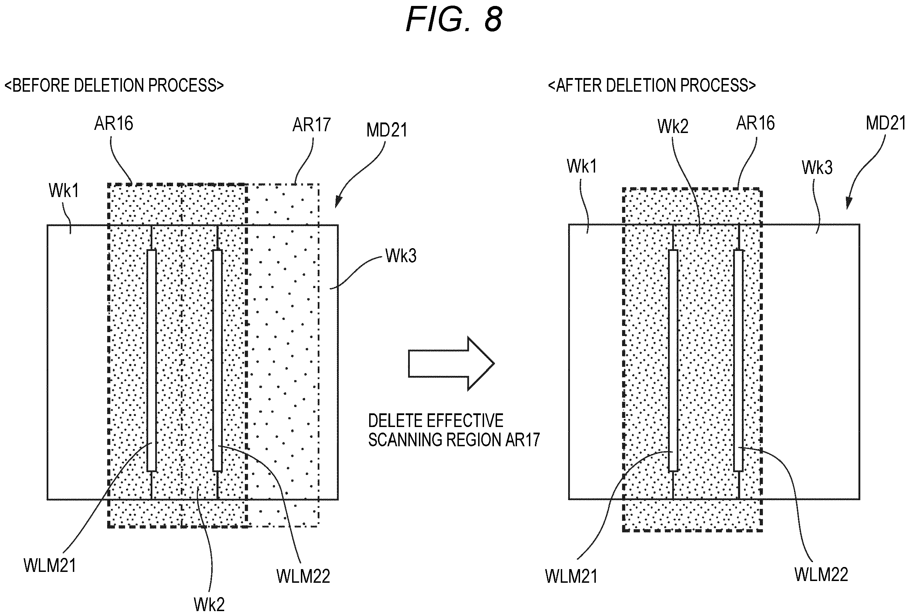

Next, a deletion process for an effective scanning region in the first embodiment will be described with reference to FIGS. 7 and 8. FIG. 7 is a view showing a deletion process example 1 for the effective scanning region AR12 in the first embodiment. FIG. 8 is a view showing a deletion process example 2 for an effective scanning region AR17 in the first embodiment. It is needless to say that the deletion process examples for the effective scanning region shown in FIGS. 7 and 8 is an example, and are not limited thereto.

Here, since the 3D model MD1 of the workpiece Wk shown in FIG. 7 is the same as the 3D model MD1 shown in FIG. 6, the description thereof will be omitted.

The deletion process for an effective scanning region is useful for teaching a scanning operation, for example, in a case where the welding torch 400 may be welded at the time of the main welding, but the sensor 4 cannot approach a scannable position at the time of appearance inspection and interferes with an obstacle (the workpiece Wk, a jig of the workpiece Wk, or the like) due to the shape of the workpiece Wk, or in a case where the effective scanning region of the sensor 4 does not reach a portion to be subjected to the appearance inspection.

Here, in a case where it is possible to acquire the data of the 3D model of the production facility or the obstacle as the information related to the production facility of the workpiece Wk, the offline teaching device 5 may generate an image including the 3D model of the virtual production facility or the obstacle, the 3D model MD1 of the virtual workpiece Wk, and one or more effective scanning regions, transmit the image to the monitor MN3, and display the image. Accordingly, the operator can visually check whether each of the effective scanning regions disposed on the 3D model MD1 of the workpiece Wk interferes with the production facility or the obstacle, and easily find the effective scanning region to be deleted.

A deletion operation for an effective scanning region in such a case will be described with reference to FIG. 7. The offline teaching device 5 deletes the effective scanning region AR12 designated by the operator operation acquired via the input device UI3.

In addition, the deletion process for an effective scanning region is useful for teaching a scanning operation in a case where, for example, a plurality of appearance inspection portions are disposed close to one another and the scanning operation for the plurality of appearance inspection portions can be executed in one scanning (that is, in a case where a plurality of appearance inspection portions are included in one effective scanning region). Each of the plurality of appearance inspection portions referred to herein is not limited to a weld bead, and may be, for example, presence or absence of a component included in a workpiece.

Here, the 3D model MD21 of the workpiece shown in FIG. 8 will be described. The 3D model MD21 shown in FIG. 8 is data of a 3D model of a workpiece produced by welding the three original workpieces Wk1, Wk2, and Wk3 by the two welding lines WLM21 and WLM22, and shows a top view (view as viewed from a Z direction) of the workpiece. In the example of the 3D model MD21 shown in FIG. 8, illustration of operation trajectory of the welding operation is omitted.

The original workpiece Wk1 and the original workpiece Wk2 are welded by the welding line WLM21. The bead appearance inspection on the weld bead formed corresponding to the welding line WLM21 is executed by the sensor 4 scanning an effective scanning region AR16. In addition, the original workpiece Wk2 and the original workpiece Wk3 are welded by the welding line WLM22. The bead appearance inspection on the weld bead formed corresponding to the welding line WLM22 is executed by the sensor 4 scanning the effective scanning region AR17. Here, the effective scanning region AR16 is a region including the two welding lines WLM21 and WLM22, and partially overlaps the effective scanning region AR17. In such a case, the offline teaching device 5 deletes the effective scanning region AR17 when a control command for commanding deletion of the effective scanning region AR17 transmitted from the input device UI3 is received.

As described above, the operator can find or delete an unnecessary teaching portion (for example, the effective scanning region AR17 shown in FIG. 8) based on the 3D model MD21 of the virtual workpiece created by the offline teaching device 5 and displayed on the monitor MN3 and the effective scanning regions superimposed on the workpiece. Accordingly, the offline teaching device 5 supports a teaching operation performed by an operator to be more efficiently executable, and can create a scanning operation teaching program more efficiently based on an operator operation.

### <Division Process for Effective Scanning Region>

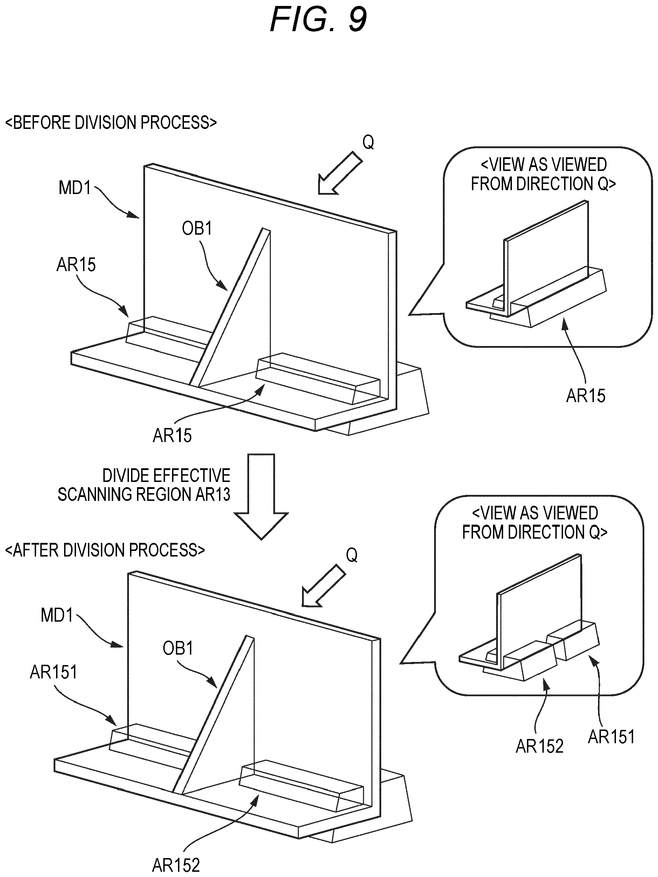

Next, a division process for an effective scanning region in the first embodiment will be described with reference to FIG. 9. FIG. 9 is a view showing a division process example for an effective scanning region AR15 in the first embodiment. It is needless to say that the division process example for an effective scanning region shown in FIG. 9 is an example, and is not limited thereto.

Here, the 3D model MD1 of the workpiece Wk shown in FIG. 9 indicates an example in which one effective scanning region AR15 including the positions of the two welding lines WLM11 and WLM12 shown in FIG. 3 is disposed. Here, one effective scanning region AR15 is disposed at a position including an obstacle OB1 (original workpiece).

The division process for an effective scanning region is useful for teaching a scanning operation, for example, in a case where the welding torch 400 may be welded at the time of the main welding, but the sensor 4 cannot approach a scannable position at the time of appearance inspection and interferes with an obstacle (the workpiece Wk, a jig of the workpiece Wk, or the like) due to the shape of the workpiece Wk.

The offline teaching device 5 divides one effective scanning region AR15 into two effective scanning regions AR151 and AR152 based on a control command for commanding division of the effective scanning region AR15 transmitted from the input device UI3 and a control command for designating a division position. Here, the offline teaching device 5 may receive designation by an operator operation for respective scanning sections of the two effective scanning regions AR151 and AR152 after the division process as in a change process for an effective scanning region described in a second embodiment to be described later.

As described above, the operator can divide a teaching portion (for example, the effective scanning region AR15 shown in FIG. 9) based on the 3D model MD1 of the virtual workpiece created by the offline teaching device 5 and displayed on the monitor MN3 and the effective scanning region AR15 superimposed on the workpiece. Accordingly, the offline teaching device 5 supports a teaching operation performed by an operator to be more efficiently executable, and can create a scanning operation teaching program more efficiently based on an operator operation.

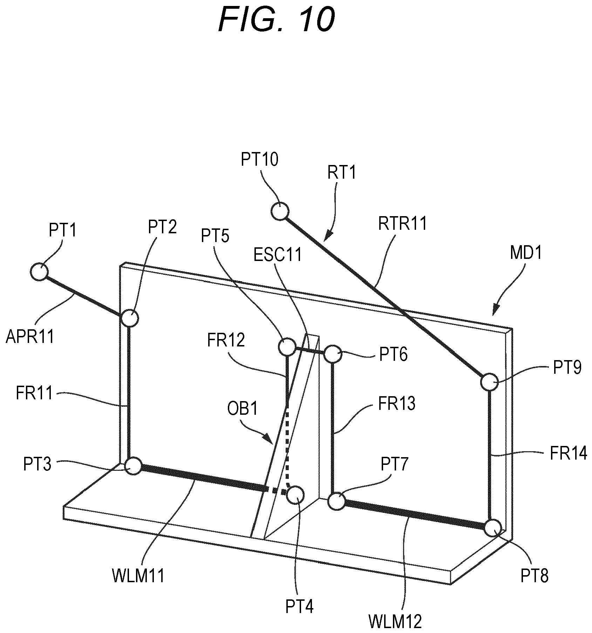

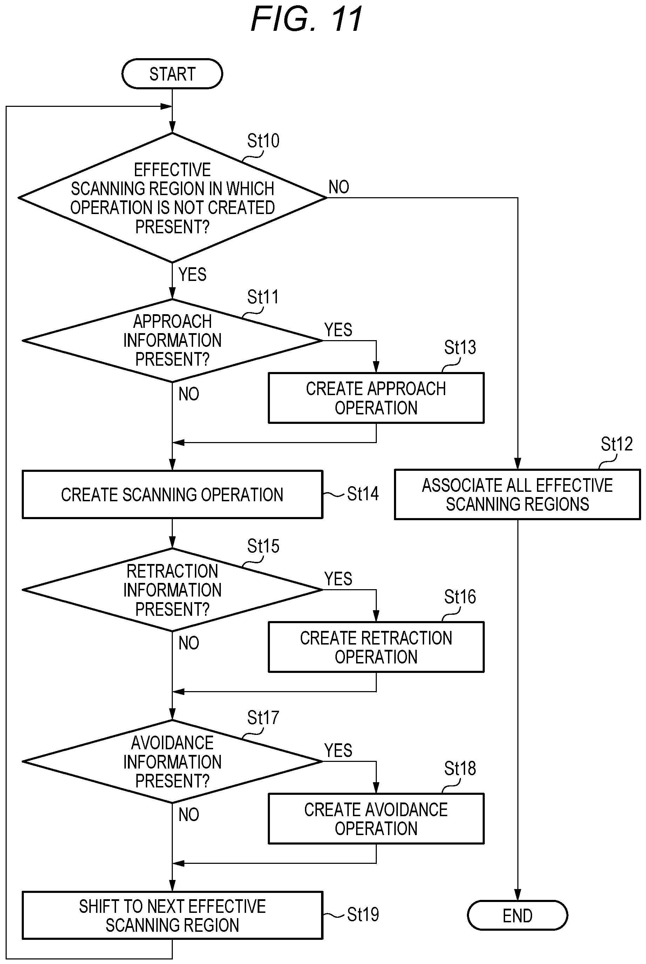

Next, an operation procedure of the offline teaching device according to the first embodiment will be described in detail with reference to FIGS. 10 and 11 using a specific example. FIG. 10 is a view showing an example of various operations associated with the effective scanning regions AR11 and AR12 in the first embodiment. FIG. 11 is a flowchart showing an operation procedure example of the offline teaching device 5 in the first embodiment. It is needless to say that the various operations shown in FIG. 10 are examples, and are not limited thereto.

The 3D model MD1 of the workpiece shown in FIG. 10 indicates an example in which the two effective scanning regions AR11 and AR12 shown in FIG. 6 are disposed. In the 3D model MD1 shown in FIG. 10, illustration of the two effective scanning regions AR11 and AR12 is omitted in order to facilitate understanding of various operations.

The offline teaching device 5 creates a new scanning operation teaching program based on the data of the 3D model MD1 and the welding operation teaching program and based on the operation trajectory RT1 of the welding operation, the information of various operations (specifically, approach information, retraction information, avoidance information, and the like) associated with the 3D model MD1 or the operation trajectory RT1, and the two effective scanning regions AR11 and AR12 disposed on the 3D model MD1.

The offline teaching device 5 determines whether there is an effective scanning region in which a scanning operation for causing the sensor 4 to scan the effective scanning region is not created, among the one or more effective scanning regions (St10).

When it is determined in the process of step St10 that there is an effective scanning region in which a scanning operation is not created (YES in St10), the offline teaching device 5 determines whether there is approach information necessary for the sensor 4 to scan the effective scanning region based on the welding operation teaching program (St11).

On the other hand, when it is determined in the process of step St10 that there is no effective scanning region in which the scanning operation is not created (NO in St10), the offline teaching device 5 creates a new scanning operation teaching program corresponding to the 3D model MD1 by associating a plurality of scanning operation teaching programs corresponding to all the effective scanning regions disposed on the 3D model MD1 (St12).

When it is determined in the process of step St11 that there is approach information (YES in St11), the offline teaching device 5 creates an approach operation corresponding to the effective scanning region (St13).

For example, when the approach information of an approach start position PT1 and an approach end position PT2 is associated with the 3D model MD1 or the operation trajectory RT1 as shown in FIG. 10 during the creation of a scanning operation teaching program for the effective scanning region AR11, the offline teaching device 5 creates an approach operation of causing the sensor 4 to approach the workpiece Wk in a section APR11 from the approach start position PT1 to the approach end position PT2. The approach information associated with the effective scanning region AR11 as referred herein may be merely the approach end position PT2.

On the other hand, when it is determined in the process of step St11 that there is no approach information (NO in St11), or after the process of step St13, the offline teaching device 5 creates a scanning operation corresponding to the effective scanning region (St14).

For example, during the creation of the scanning operation teaching program for the effective scanning region AR11, the offline teaching device 5 creates a scanning operation for causing the sensor 4 to scan a section (here, a section corresponding to the welding line WLM11) from a scanning start position PT3 to a scanning end position PT4 in the effective scanning region AR11 disposed by an operator operation. Similarly, during the creation of a scanning operation teaching program for the effective scanning region AR12, the offline teaching device 5 creates a scanning operation for causing the sensor 4 to scan a section (here, a section corresponding to the welding line WLM12) from the scanning start position PT3 to the scanning end position PT4 in the effective scanning region AR12 disposed by an operator operation.

In the example shown in FIG. 10, an example in which a start position and an end position of the welding line WLM11 are located at substantially the same positions as the scanning start position PT3 and the scanning end position PT4 of the effective scanning region AR11, respectively, and a start position and an end position of the welding line WLM12 are located at substantially the same positions as a start position PT7 and an end position PT8 of the effective scanning region AR12, respectively, is shown as an example, and is not limited thereto. A start position of a welding line may be different from a start position of an effective scanning region. Similarly, an end position of a welding line may be different from an end position of an effective scanning region.

The offline teaching device 5 determines whether there is retraction information for the sensor 4 to separate from the workpiece based on the welding operation teaching program (St15).

When it is determined in the process of step St15 that there is retraction information (YES in St15), the offline teaching device 5 creates a retraction operation corresponding to the effective scanning region (St16).

For example, in a case where the retraction information of a retraction start position PT9 and a retraction end position PT10 is associated with the 3D model MD1 or the operation trajectory RT1 as shown in FIG. 10 during the creation of the scanning operation teaching program for the effective scanning region AR12, the offline teaching device 5 creates a retraction operation of causing the sensor 4 to separate from the workpiece Wk in a section RTR11 from the retraction start position PT9 to the retraction end position PT10. The retraction information associated with the effective scanning region AR12 as referred herein may be merely the retraction start position PT9.

On the other hand, when it is determined in the process of step St15 that there is no retraction information (NO in St15), or after the process of step St16, the offline teaching device 5 determines whether there is avoidance information for the sensor 4 to avoid an obstacle based on the welding operation teaching program(St17).

When it is determined in the process of step St17 that there is avoidance information (YES in St17), the offline teaching device 5 creates an avoidance operation corresponding to the effective scanning region (St18).

For example, in a case where the avoidance information of an avoidance start position PT5 and an avoidance end position PT6 is associated with the 3D model MD1 or the operation trajectory RT1 as shown in FIG. 10 during the creation of the scanning operation teaching program for the effective scanning region AR11 or the effective scanning region AR12, the offline teaching device 5 creates an avoidance operation of avoiding the sensor 4 from the obstacle OB1 in a section ESC11 from the avoidance start position PT5 to the avoidance end position PT6.

On the other hand, when it is determined in the process of step St17 that there is no avoidance information (NO in St17), or after the process of step St18, the offline teaching device 5 proceeds to a creation process for a scanning operation corresponding to the next (that is, another) effective scanning region (that is, the process of step St10).

As described above, the offline teaching device 5 can automatically create a new scanning operation teaching program by creating a scanning operation corresponding to each of one or more teaching portions (effective scanning regions) generated based on an operator operation via the input device UI3 and associating the scanning operations corresponding to all the teaching portions (effective scanning regions). In addition, the offline teaching device 5 can create a new scanning operation teaching program based on an operation trajectory of a welding operation, and thus can further improve the scanning accuracy of the teaching portion (that is, the effective scanning region) at the time of operation and can more efficiently reduce the load required for the teaching operation such as correction on the teaching portion (effective scanning region).

As described above, the offline teaching device 5 according to the first embodiment includes the input and output unit 53 (example of the input unit) capable of receiving an operator operation, and the input and output unit 53 or the communication unit 50 (example of the acquisition unit) that acquires the data (example of three-dimensional shape data) of the 3D model MD1 of the workpiece Wk produced by welding, the operation trajectory of the welding, and the effective scanning range ARC (example of the scanning range ) of the sensor 4 that scans the appearance shape of the workpiece Wk, the 3D calculation unit 54 (example of the generation unit) that generates an effective scanning region (for example, the effective scanning region AR11 shown in FIG. 6, which is an example of the three-dimensional region) to be scanned by the sensor 4 based on the acquired effective scanning range AR0 and the scanning section (for example, the scanning section SR1 shown in FIG. 5), and the scanning operation creation unit 552 (example of the control unit) that disposes at least one effective scanning region on the data of the 3D model MD1 of the workpiece Wk based on the operator operation input to the input and output unit 53, and that creates and outputs a teaching program for causing the welding robot MC1 that performs welding to scan the effective scanning region based on the disposed effective scanning region (for example, the effective scanning regions AR11 and AR12 shown in FIG. 10) and the operation trajectory RT1 of the welding.

Accordingly, the offline teaching device 5 according to the first embodiment can dispose effective scanning regions corresponding to the position and the orientation of the sensor 4 at the designated position on the 3D model MD1 based on the position of the welding robot MC1 corresponding to the operation trajectory RT1 of the welding robot MC1, and create the scanning operation for each of the disposed effective scanning regions. Therefore, the offline teaching device 5 can more efficiently create a scanning operation teaching program executed by the welding robot MC1 by using the created scanning operation, and can further improve the accuracy of the positions of a scanning portion and a teaching portion (that is, the effective scanning region) scanned at the time of operation based on the scanning operation teaching program. Therefore, the offline teaching device 5 can more efficiently create a scanning operation teaching program capable of more efficiently reducing the load required for a teaching operation such as correction on a teaching portion (effective scanning region).

In addition, as described above, the scanning operation creation unit 552 of the offline teaching device 5 according to the first embodiment creates a teaching program based on the disposed effective scanning regions (for example, the effective scanning regions AR11 and AR12 shown in FIG. 10), the operation trajectory RT1 of the welding, and the operation information (for example, approach information, retraction information, and avoidance information) of the welding robot MC1 that performs welding associated with the data of the 3D model MD1. Accordingly, the offline teaching device 5 according to the first embodiment can create a scanning operation for each of the disposed effective scanning regions based on the operation trajectory RT1 of the welding and the operation information of the welding robot MC1. Therefore, the offline teaching device 5 can more efficiently create a scanning operation teaching program to be executed by the welding robot MC1 using the created scanning operation.

In addition, as described above, the scanning operation creation unit 552 of the offline teaching device 5 according to the first embodiment creates, based on the operation information, various operations (for example, an approach operation, a retraction operation, and an avoidance operation) for the workpiece Wk of the welding robot MC1 and a scanning operation for each effective scanning region to be executed by the welding robot MC1. The scanning operation creation unit 552 creates a teaching program by associating the scanning operation corresponding to each of the created effective scanning regions with various operations. Accordingly, the offline teaching device 5 according to the first embodiment can create a scanning operation teaching program to be executed on the workpiece Wk based on the created various operations of the welding robot MC1 and the scanning operation created for each effective scanning region.

In addition, as described above, the scanning operation creation unit 552 of the offline teaching device 5 according to the first embodiment extracts a welding line (for example, the welding lines WLM11 and WLM12 shown in FIG. 10) for welding associated with the data of the 3D model MD1, and creates and outputs a teaching program in which the welding line included in the effective scanning region is set as a scanning portion (that is, a teaching portion) of the sensor 4. Accordingly, the offline teaching device 5 according to the first embodiment can create a scanning operation teaching program capable of executing the bead appearance inspection on the weld bead formed in the produced workpiece Wk.

In addition, as described above, the 3D calculation unit 54 of the offline teaching device 5 according to the first embodiment duplicates (copies) and disposes an effective scanning region based on an operator operation. The scanning operation creation unit 552 creates a teaching program for scanning an effective scanning region based on the operation trajectory RT1 of welding and at least one effective scanning region among all the effective scanning regions (for example, the effective scanning regions AR11 to AR14 shown in FIG. 6) including the duplicated effective scanning region (for example, the effective scanning regions AR13 and AR14 shown in FIG. 6). Accordingly, the offline teaching device 5 according to the first embodiment can duplicate each effective scanning region indicating a teaching portion, thereby suppressing a positional deviation between the effective scanning region virtually created and superimposed and displayed on the 3D model MD1 and the effective scanning region that can actually be scanned by the sensor 4. Therefore, the offline teaching device 5 can more efficiently create a scanning operation teaching program for further improving the accuracy of the positions of the scanning portion and the teaching portion (that is, the effective scanning region) scanned during the operation.

In addition, as described above, the 3D calculation unit 54 of the offline teaching device 5 according to the first embodiment deletes any of the two or more generated effective scanning regions (for example, the effective scanning region AR12 shown in FIG. 7) based on an operator operation. The scanning operation creation unit 552 creates a teaching program for scanning an effective scanning region based on the operation trajectory RT1 of welding and at least one effective scanning region among all the effective scanning regions (for example, the effective scanning region AR11 shown in FIG. 7) after excluding the deleted effective scanning region. Accordingly, the offline teaching device 5 according to the first embodiment can delete each effective scanning region indicating a teaching portion, thereby creating a scanning operation teaching program that does not include an unnecessary scanning operation.

In addition, as described above, the 3D calculation unit 54 of the offline teaching device 5 according to the first embodiment divides an effective scanning region (for example, the effective scanning region AR13 shown in FIG. 9) based on an operator operation. The scanning operation creation unit 552 disposes a plurality of divided effective scanning regions (for example, the effective scanning regions AR131 and AR132 shown in FIG. 9), and creates a teaching program for scanning an effective scanning region based on the operation trajectory RT1 of welding and at least one effective scanning region among all the effective scanning regions including the plurality of divided effective scanning regions. Accordingly, the offline teaching device 5 according to the first embodiment can divide each effective scanning region indicating a teaching portion, thereby more efficiently creating a scanning operation teaching program in which the sensor 4 does not interfere with an obstacle (production facility or original workpiece constituting the workpiece Wk).

As described above, the offline teaching device 5 according to the first embodiment includes one or more computers communicably connected to the input device UI3 by an operator operating the input device UI3. The operator inputs, to the computer, data (example of three-dimensional shape data) of the 3D model MD1 of the workpiece Wk produced by welding, and inputs, to the computer, a scanning section (for example, the scanning section SR1 shown in FIG. 5) in which the appearance shape of the workpiece Wk is scanned. The offline teaching device 5 creates a teaching program for causing the welding robot MC1 that performs welding to scan an effective scanning region (for example, the effective scanning region AR11 shown in FIG. 6, which is an example of a three-dimensional region) based on a scanning portion (for example, the welding lines WLM11 and WLM12 shown in FIG. 10) corresponding to a scanning section in the data of the 3D model MD1.

Accordingly, the offline teaching device 5 according to the first embodiment can automatically create a scanning operation teaching program by acquiring the data of the 3D model MD1 of the workpiece Wk and the scanning section in which the appearance shape of the workpiece Wk is scanned.

### (Second Embodiment)

The offline teaching device 5 according to the first embodiment shows an example in which an operator operation via the input device UI3 is received, edition such as duplication (copy), deletion, or division of an effective scanning region having the same scanning section is executed based on the received operator operation, and a new scanning operation teaching program for causing the sensor 4 to scan each of one or more edited effective scanning regions is created. The offline teaching device 5 according to a second embodiment shows an example in which an operator operation via the input device UI3 is received, edition of a scanning section, a rotation angle, and a position (arrangement) for each effective scanning region is executed based on the received operator operation, and a new scanning operation teaching program for causing the sensor 4 to scan each of one or more edited effective scanning regions is created.

The welding system 100 according to the second embodiment has substantially the same configuration as the internal configuration of the welding system 100 according to the first embodiment. In addition, the offline teaching device 5 according to the second embodiment has substantially the same configuration as the internal configuration of the welding system 100 according to the first embodiment. The same components as those of the first embodiment are denoted by the same reference numerals and descriptions thereof are omitted.

The offline teaching device 5 according to the second embodiment receives an operator operation via the input device UI3, and executes generation of one or more effective scanning regions based on a scanning section, a rotation angle, and a position (arrangement) designated by the received operator operation. That is, the effective scanning regions in the second embodiment may be generated to have different scanning sections, rotation angles, and positions (arrangements). In addition, in a case where information (for example, a scanning section, a rotation angle, and a position (arrangement) of the effective scanning region) of one or more effective scanning regions is associated with the acquired 3D model MD1 or the teaching program for scanning teaching, the offline teaching device 5 may receive the edition operation by the operator on the scanning section, the rotation angle, and the position (arrangement) of any of the associated effective scanning regions.

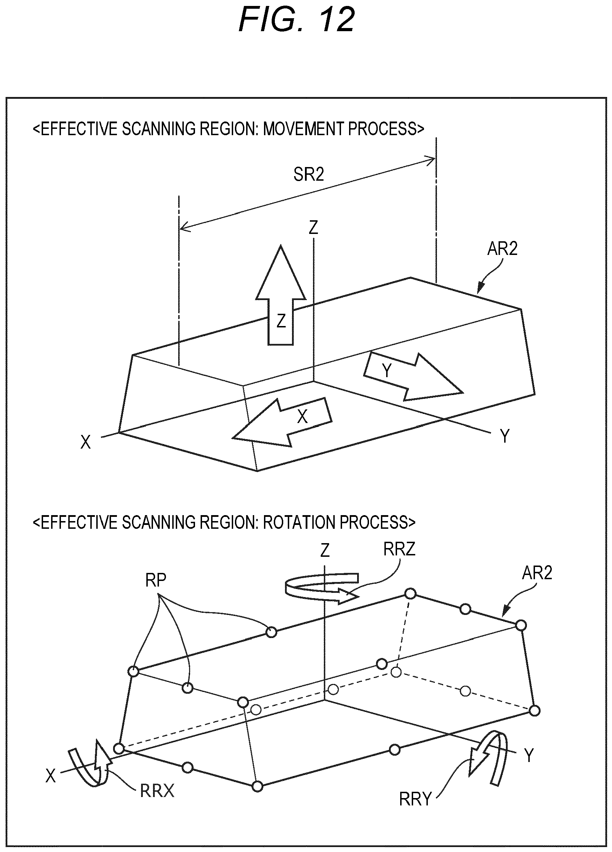

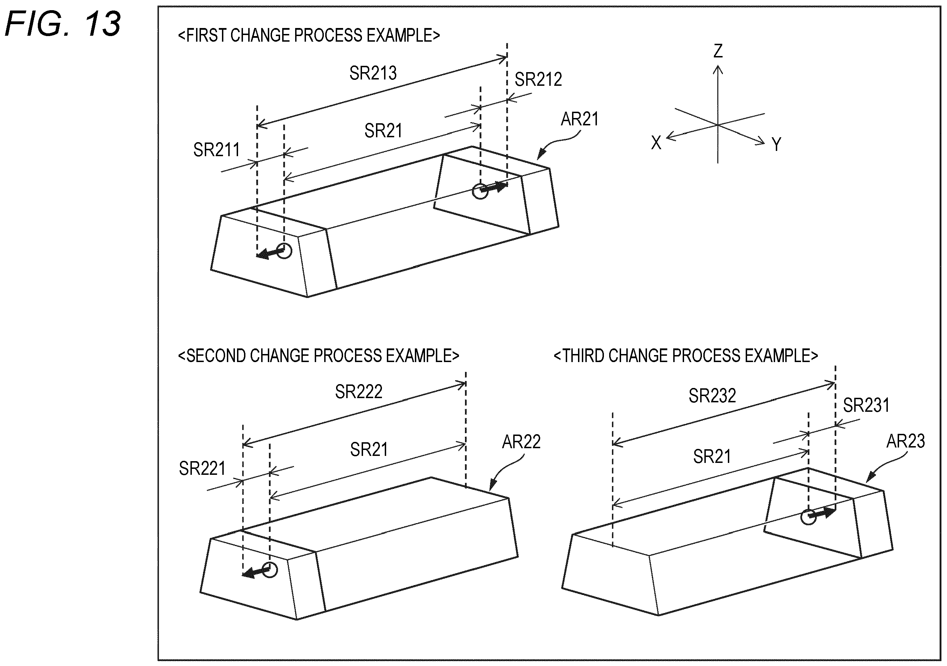

A movement process, a rotation process, and a change process for an effective scanning region AR2 of the offline teaching device 5 according to the second embodiment will be described with reference to FIGS. 12 and 13. FIG. 12 is a view showing a movement process example and a rotation process example for the effective scanning region AR2 in the second embodiment. FIG. 13 is a view showing a first change process example, a second change process example, and a third change process example for an effective scanning region in the second embodiment. It is needless to say that the effective scanning region AR2 shown in FIGS. 12 and 13 is an example, and is not limited thereto.

### <Movement Process for Effective Scanning Region>

The effective scanning region AR2 shown in FIG. 12 includes a scanning section SR2 along a traveling direction (X direction). The offline teaching device 5 receives an operator operation of moving the scanning section of the effective scanning region AR2 in the X direction, the Y direction, or the Z direction with respect to the effective scanning region AR2. The offline teaching device 5 receives an operator operation via the input device UI3, and changes the position of the effective scanning region AR2 based on the received operator operation (specifically, a movement amount in any direction).

Here, when it is determined that at least a part of the effective scanning region AR2 after the movement process based on an operator operation is not scannable based on an operation trajectory of a welding operation and an effective scanning range (see FIG. 4), the offline teaching device 5 may notify that the effective scanning region AR2 after the movement process is not scannable, or may generate a screen in which only a region determined to be not scannable in the effective scanning region AR2 after the movement process is highlighted in a color such as red, transmit the screen to the monitor MN3, and display the screen. Accordingly, the operator can confirm at a glance whether the effective scanning region AR2 after the movement process is a region that can be scanned by the sensor 4.

### <Rotation Process for Effective Scanning Region>

The offline teaching device 5 generates an image in which each of a plurality of rotation reference points RP is superimposed on a 3D model of the effective scanning region AR2, transmits the image to the monitor MN3, and displays the image. In FIG. 12, reference numerals are not given to all the rotation reference points RP. In addition, in the example shown in FIG. 12, each of 16 rotation reference points RP is shown, but positions and the number of rotation reference points for rotating the effective scanning region AR2 are not limited thereto.

The offline teaching device 5 receives a designation operation on the rotation reference point RP by an operator operation and a rotation operation in a rotation direction RRX around an X axis, a rotation direction RRY around a Y axis, or a rotation direction RRZ around a Z axis. The offline teaching device 5 executes a rotation process of rotating the effective scanning region AR2 in the rotation direction RRX, the rotation direction RRY, or the rotation direction RRZ with the designated rotation reference point RP as an origin based on an operator operation.

Here, when it is determined that at least a part of the effective scanning region AR2 after the rotation process based on an operator operation is not scannable based on the 3D model MD1 of the workpiece Wk, the operation trajectory of the welding operation, and the effective scanning range (see FIG. 4), the offline teaching device 5 may notify that the effective scanning region AR2 after the rotation process is not scannable, or may generate a screen in which only a region determined to be scannable in the effective scanning region AR2 after the rotation process is highlighted in a color such as red, transmit the screen to the monitor MN3, and display the screen. Accordingly, the operator can confirm at a glance whether the effective scanning region AR2 after the rotation process is a region that can be scanned by the sensor 4.

### <Change Process for Effective Scanning Region>

The effective scanning region AR2 shown in FIG. 13 includes the scanning section SR2 along the traveling direction (X direction). The offline teaching device 5 receives an operator operation for changing the effective scanning region AR2 by extending a scanning section of the effective scanning region AR2 in the X direction, the Y direction, or the Z direction with respect to the effective scanning region AR2. The offline teaching device 5 receives an operator operation via the input device UI3, and changes a length (scanning section) of the effective scanning region AR2 based on the received operator operation (specifically, extension in the X direction).

The offline teaching device 5 receives an operator operation of extending the scanning section of the effective scanning region AR2 in the X direction, the Y direction, or the Z direction with respect to the effective scanning region AR2. The offline teaching device 5 receives an operator operation via the input device UI3, and changes a size (scanning section) of the effective scanning region AR2 based on the received operator operation (specifically, extension in the X direction).

Here, a change process example for the effective scanning region AR2 changed based on an operator operation will be described. An effective scanning region AR21 shown in the first change process example is an effective scanning region generated by executing a change process of extending the effective scanning region AR2 by a distance SR211 in the X direction and a distance SR212 in the -X direction, and includes a scanning section SR213. An effective scanning region AR22 shown in the second change process example is an effective scanning region generated by executing a change process of extending the effective scanning region AR2 in the X direction by the distance SR221, and includes a scanning section SR222. An effective scanning region AR23 shown in the third change process example is an effective scanning region generated by executing a change process of extending the effective scanning region AR2 in the -X direction by a distance SR231, and includes a scanning section SR232. It is needless to say that each of the effective scanning regions AR21, AR22, and AR23 after the change process shown in FIG. 13 is merely an example, and is not limited thereto.

Here, in a case where it is determined that at least a part of a scanning section of the effective scanning region AR2 changed based on an operator operation is not scannable based on an operation trajectory of a welding operation and an effective scanning range (see FIG. 4), the offline teaching device 5 may notify that the effective scanning region AR2 after the change process is outside the effective scanning range, or may generate a screen in which a region outside the effective scanning range in the effective scanning region AR2 after the change process is highlighted in a color such as red, transmit the screen to the monitor MN3, and display the screen. Accordingly, the operator can confirm at a glance whether the effective scanning region AR2 after the change process is a region that can be scanned by the sensor 4.

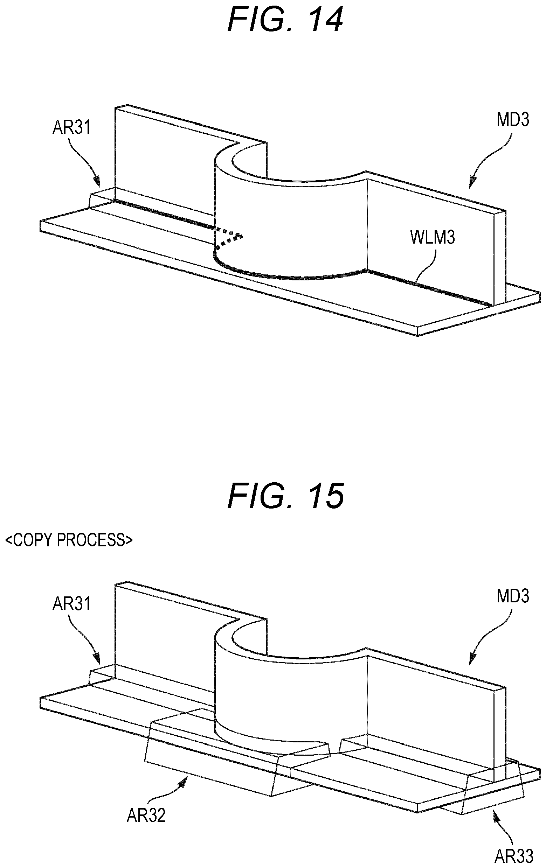

An edition process for an effective scanning region and a creation process for a new scanning operation teaching program of the offline teaching device 5 according to the second embodiment will be specifically described with reference to FIGS. 14, 15, and 16. It is needless to say that a 3D model MD3 shown in FIGS. 14 to 16 is an example, and is not limited thereto. Further, in the 3D model MD3 shown in each of FIGS. 14 to 16, illustration of an operation trajectory RT3 of a welding operation is omitted in order to facilitate understanding of the description of the edition process for an effective scanning region.

In addition, in the following description, a description will be given of an example in which the offline teaching device 5 creates a scanning operation teaching program in a case where information related to a welding line (position information of the welding line or the like) is not acquired. A teaching portion WLM3 shown in FIG. 14 is shown for easy understanding of teaching portions (scanning portions) taught by the arrangement of a plurality of effective scanning regions AR31, AR32, AR33, AR34, and AR35 to be described below, and may be omitted on the screen displayed on the monitor MN3.

The offline teaching device 5 according to the second embodiment acquires data of the 3D model MD3, and a welding operation teaching program and a scanning operation teaching program of the workpiece Wk, which are to be created by a new scanning operation teaching program, from the robot control device 2, the inspection control device 3, and the input device UI3, respectively, based on an operator operation.

The offline teaching device 5 superimposes the operation trajectory RT3 of the welding operation on the acquired data of the 3D model MD3 of the workpiece Wk. Here, display or non-display of the operation trajectory RT3 of the welding operation superimposed on the data of the 3D model MD3 may be selected by an operator. The offline teaching device 5 generates an image in which the acquired operation trajectory RT3 of the welding operation is superimposed on the 3D model MD3 of the workpiece Wk, transmits the image to the monitor MN3, and displays the image.

In addition, the offline teaching device 5 superimposes, on the data of the 3D model MD3, the acquired 3D model MD3 of the workpiece Wk or the effective scanning region AR31 associated with the scanning operation teaching program. In a case where there is no effective scanning region associated with the 3D model MD3 of the workpiece Wk or the scanning operation teaching program, the offline teaching device 5 executes a creation process for a new effective scanning region based on an operator operation.

The offline teaching device 5 shown in FIG. 15 generates two effective scanning regions AR32 and AR33 obtained by copying (duplicating) the effective scanning region AR31, based on an operator operation via the input device UI3. The offline teaching device 5 moves each of the two effective scanning regions AR32 and AR33 to a position designated by the operator and disposes the effective scanning regions AR32 and AR33 on the 3D model MD3.

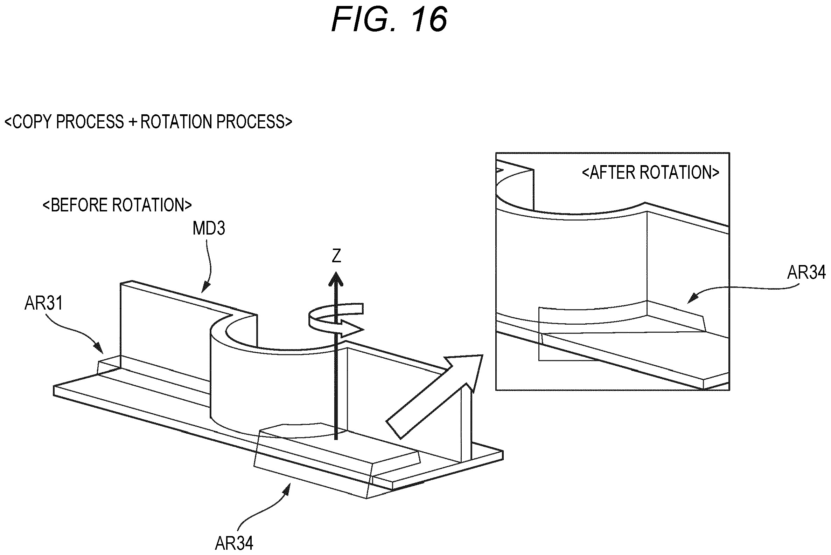

The offline teaching device 5 shown in FIG. 16 generates the two effective scanning regions AR34 and AR35 obtained by copying (duplicating) the effective scanning region AR31, based on an operator operation via the input device UI3, and disposes the effective scanning regions AR34 and AR35 on the 3D model MD3. In FIG. 16, illustration of the effective scanning region AR35 is omitted for easy understanding of the description. The offline teaching device 5 moves each of the two effective scanning regions AR34 and AR35 to a position designated by the operator. In addition, the offline teaching device 5 receives a designation operation on a rotation reference point (not illustrated) designated by the operator and a designation operation on a rotation amount in any direction with the rotation reference point as an origin in each of the two effective scanning regions AR34 and AR35. The offline teaching device 5 rotates each of the effective scanning regions AR34 and AR35 based on the received designation operations, and disposes the effective scanning regions AR34 and AR35 on the 3D model MD3.

Here, the offline teaching device 5 may further receive a designation operation related to a shape of a teaching portion corresponding to each of the five effective scanning regions AR31 to AR35. Specifically, the offline teaching device 5 may receive, for each effective scanning region, a designation operation of designating whether the teaching portion (that is, a scanning portion) is a straight line shape, a curved line shape, or a shape including a straight line and a curved line.

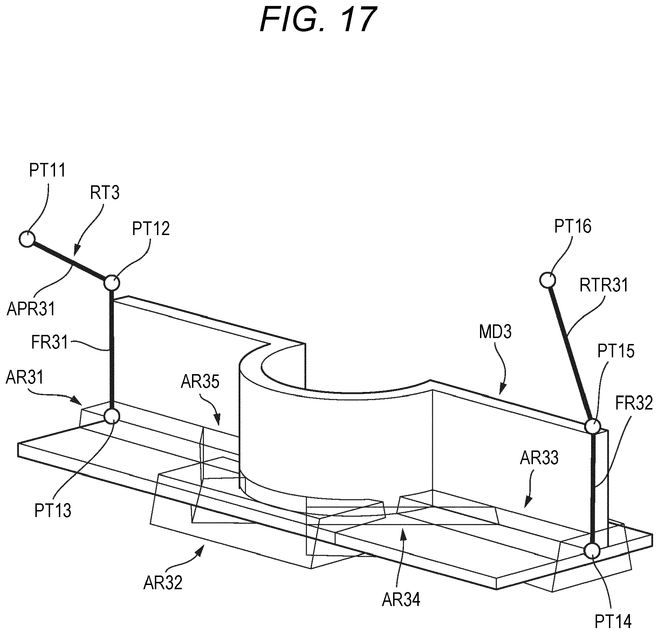

For example, the offline teaching device 5 in the example of the 3D model MD3 shown in FIG. 17 receives, by an operator operation, a designation operation indicating that teaching portions corresponding to the effective scanning regions AR31 and AR33 are straight lines, teaching portions corresponding to the effective scanning regions AR34 and AR35 are lines each including a straight line and a curved line, and a teaching portion corresponding to the effective scanning region AR33 is a curved line. In such a case, the offline teaching device 5 acquires the teaching portion WLM3 taught by each of the generated five effective scanning regions AR31 to AR35 based on information of the shape of the teaching portion corresponding to each designated effective scanning region, the three-dimensional shape of the 3D model MD3 (specifically, a surface shape of one or more original workpieces constituting the workpiece Wk, an intersection point or a contact point among the original workpieces, and the like), or an operation trajectory of a welding operation.

Here, in a case where a plurality of effective scanning regions are continuous, the offline teaching device 5 may acquire teaching portions included in the plurality of continuous effective scanning regions as one continuous teaching portion.

As described above, even when there is no position information of a welding line, the offline teaching device 5 according to the second embodiment acquires the teaching portion WLM3 taught by each of the generated five effective scanning regions AR31 to AR35, and creates a new scanning operation teaching program for causing the sensor 4 to scan the five effective scanning regions AR31 to AR35 using the acquired teaching portion WLM3. A creation procedure of a new scanning operation teaching program by the offline teaching device 5 is the same as the flowchart showing the operation procedure example of the offline teaching device 5 according to the first embodiment shown in FIG. 11, and thus the description thereof will be omitted.

Next, specific examples of various operations created based on the five effective scanning regions AR31 to AR35 will be described with reference to FIG. 17. FIG. 17 is a view showing an example of various operations associated with the effective scanning regions AR31 to AR35 in the second embodiment. It is needless to say that a specific example of the various operations shown in FIG. 17 is an example, and is not limited thereto.

The offline teaching device 5 executes creation and association of various operations of the 3D model MD3 based on the five effective scanning regions AR31 to AR35 based on the operation procedure shown in the flowchart of FIG. 11.

In the example shown in FIG. 17, the offline teaching device 5 creates an approach operation of causing the sensor 4 to approach the workpiece Wk in a section APR31 from an approach start position PT11 to an approach end position PT12 based on information on the various operations associated with the 3D model MD3 or the operation trajectory RT3 of the welding operation. In addition, the offline teaching device 5 creates a retraction operation of causing the sensor 4 to separate from the workpiece Wk in a section RTR31 from a retraction start position PT15 to a retraction end position PT16 based on information on various operations associated with the 3D model MD3 or the operation trajectory RT3 of the welding operation.

The offline teaching device 5 associates the operations of all the created effective scanning regions. Specifically, the offline teaching device 5 associates the approach operation, the retraction operation, and a scanning operation (that is, an operation for causing the sensor 4 to scan the teaching portion WLM3). FIG. 17 shows an example in which the 3D model MD3 or the operation trajectory RT3 of the welding operation is not associated with the avoidance information.

As described above, the offline teaching device 5 according to the second embodiment can automatically create a new scanning operation teaching program by creating a scanning operation corresponding to each of one or more teaching portions (effective scanning regions) generated based on an operator operation via the input device UI3 and associating the scanning operations corresponding to all the teaching portions (effective scanning regions). In addition, the offline teaching device 5 can create a new scanning operation teaching program based on an operation trajectory of a welding operation, and thus can further improve the scanning accuracy of the teaching portion (that is, the effective scanning region) at the time of operation and can more efficiently reduce the load required for the teaching operation such as correction on the teaching portion (effective scanning region).

In addition, as described above, the offline teaching device 5 according to the second embodiment can create a new scanning operation teaching program based on each of the generated one or more effective scanning regions even in a case where there is no data related to the welding line (position information of the welding line).

In a case where a welding line, information of a plurality of points (intersection points) at which original workpieces constituting the workpiece Wk intersect with one another or a plurality of points (contact points) at which original workpieces constituting the workpiece Wk come into contact with one another, a teaching portion (scanning portion) or the like is associated with the data of the 3D model MD3 in advance, the offline teaching device 5 according to the second embodiment acquires position information of the associated welding line, intersection points, contact points, or teaching portion (scanning portion). The offline teaching device 5 may execute a creation process for one or more effective scanning regions, a copy (duplication) process, a rotation process, a movement process, and the like on the created effective scanning regions based on the operation trajectory RT3 of the welding operation and the acquired welding line, intersection points, contact points, or teaching portion (scanning portion), automatically generate each of the plurality of effective scanning regions including the acquired welding line, intersection points, contact points, or teaching portion (scanning portion), and dispose the effective scanning regions on the 3D model MD3. Accordingly, the offline teaching device 5 can more efficiently create a scanning operation teaching program for scanning the acquired welding line, intersection points, contact points, or teaching portion (scanning portion) with the sensor 4.

In addition, the offline teaching device 5 according to the second embodiment may automatically calculate a length of a straight line, a curvature of a curve, and the like of a teaching portion (scanning portion) based on information on a surface shape of original workpieces constituting the workpiece Wk associated with the 3D model MD3, the information on a plurality of points (intersection points) at which the original workpieces intersect with one another or a plurality of points (contact points) at which the original workpieces come into contact with one another, and shape information of the teaching portion (scanning portion) corresponding to each effective scanning region. Accordingly, the offline teaching device 5 can automatically calculate the acquired welding line, intersection points, contact points, or teaching portions (for example, the teaching portion WLM3), and thus can more efficiently create a scanning operation teaching program for scanning with the sensor 4.

As described above, the offline teaching device 5 according to the second embodiment includes the input and output unit 53 (example of the input unit) capable of receiving an operator operation, the input and output unit 53 or the communication unit 50 (example of the acquisition unit) that acquires the data (example of three-dimensional shape data) of the 3D model MD3 of the workpiece Wk produced by welding, the operation trajectory RT3 of the welding, and the effective scanning range ARC (example of the scanning range) of the sensor 4 that scans the appearance shape of the workpiece Wk, the 3D calculation unit 54 (example of the generation unit) that generates an effective scanning region (for example, the effective scanning regions AR21, AR22, and AR23 shown in FIG. 13, which is an example of the three-dimensional region) to be scanned by the sensor 4 based on the acquired effective scanning range AR0 (example of three-dimensional region) and a scanning section designated by an operator operation (for example, the scanning section SR213, SR222, and SR232 shown in FIG. 13), and the scanning operation creation unit 552 (example of the control unit) that disposes at least one effective scanning region on the data of the 3D model MD3 of the workpiece based on the operator operation input to the input and output unit 53, and that creates and outputs a teaching program for causing the welding robot MC1 that performs welding to scan the effective scanning region based on the disposed effective scanning region and the operation trajectory RT3 of the welding.

Accordingly, the offline teaching device 5 according to the second embodiment can dispose effective scanning regions corresponding to the position and the orientation of the sensor 4 at the designated position on the 3D model MD3 based on the position of the welding robot MC1 corresponding to the operation trajectory RT3 of the welding robot MC1, and create a scanning operation for each of the disposed effective scanning regions. Therefore, the offline teaching device 5 can more efficiently create a scanning operation teaching program executed by the welding robot MC1 by using the created scanning operation, and can further improve the accuracy of the positions of a scanning portion and a teaching portion (that is, the effective scanning region) scanned at the time of operation based on the scanning operation teaching program. Therefore, the offline teaching device 5 can more efficiently create a scanning operation teaching program capable of more efficiently reducing the load required for a teaching operation such as correction on a teaching portion (effective scanning region).

In addition, as described above, the scanning operation creation unit 552 of the offline teaching device 5 according to the second embodiment creates a teaching program based on the disposed effective scanning regions, the operation trajectory RT3 welding, and the operation information (for example, approach information, retraction information, and avoidance information) of the welding robot MC1 that performs welding associated with the data of the 3D model MD1. Accordingly, the offline teaching device 5 according to the second embodiment can create a scanning operation for each of the disposed effective scanning regions based on the operation trajectory RT3 of the welding and the operation information of the welding robot MC1. Therefore, the offline teaching device 5 can more efficiently create a scanning operation teaching program to be executed by the welding robot MC1 using the created scanning operation.

In addition, as described above, the scanning operation creation unit 552 of the offline teaching device 5 according to the second embodiment creates various operations (for example, an approach operation, a retraction operation, and an avoidance operation) for the workpiece of the welding robot MC1 and a scanning operation for each effective scanning region executed by the welding robot MC1 based on the operation information, and creates a teaching program by associating a scanning operation corresponding to each of the created effective scanning regions with the various operations. Accordingly, the offline teaching device 5 according to the second embodiment can create a scanning operation teaching program to be executed on the workpiece Wk based on the created various operations of the welding robot MC1 and the scanning operation created for each effective scanning region.

As described above, the scanning operation creation unit 552 of the offline teaching device 5 according to the second embodiment receives designation of the shape (for example, a straight line shape, a curved line shape, or a shape including a straight line and a curved line) of a scanning portion (that is, the teaching portion) to be scanned in each of the effective scanning regions by an operator operation, and creates and outputs a teaching program for causing the welding robot MC1 to scan the effective scanning region based on the designated shape of each scanning portion in the effective scanning region, the disposed effective scanning region, and the operation trajectory RT3. Accordingly, the offline teaching device 5 according to the second embodiment can automatically create a scanning operation teaching program suitable for the designated shape of the scanning portion (teaching portion) in each effective scanning region based on the shape of the scanning portion (teaching portion).

In addition, as described above, the 3D calculation unit 54 of the offline teaching device 5 according to the second embodiment duplicates and disposes an effective scanning region (for example, the effective scanning region AR31 shown in FIG. 15) based on an operator operation. The scanning operation creation unit 552 creates a teaching program for scanning an effective scanning region (for example, the effective scanning regions AR31 to AR35 shown in FIG. 17) based on the operation trajectory RT3 of welding and at least one effective scanning region among all the effective scanning regions including the duplicated effective scanning region (for example, the effective scanning regions AR32 to AR35 shown in FIGS. 15 to 17). Accordingly, the offline teaching device 5 according to the second embodiment can duplicate each the effective scanning region indicating a teaching portion, thereby suppressing a positional deviation between the effective scanning region virtually created and superimposed and displayed on the 3D model MD3 and the effective scanning region that can actually be scanned by the sensor 4. Therefore, the offline teaching device 5 can more efficiently create a scanning operation teaching program for further improving the accuracy of the positions of the scanning portion and the teaching portion (that is, the effective scanning region) scanned during the operation.

In addition, as described above, the 3D calculation unit 54 of the offline teaching device 5 according to the second embodiment rotates an effective scanning region based on one point (any rotation reference point among the plurality of rotation reference points RP shown in FIG. 12) on an effective scanning region designated by an operator operation and a rotation amount around the one point. The scanning operation creation unit 552 creates a teaching program for scanning an effective scanning region based on the operation trajectory RT3 of welding and at least one effective scanning region among all the effective scanning regions (for example, the effective scanning regions AR31 to AR35 shown in FIG. 17) including the rotated effective scanning region (for example, the effective scanning region AR34 shown in FIG. 16). Accordingly, the offline teaching device 5 according to the second embodiment can generate an effective scanning region more suitable for a teaching portion by allowing each effective scanning region indicating a teaching portion to rotate. Therefore, the offline teaching device 5 according to the second embodiment can more efficiently create a scanning operation teaching program more suitable for the workpiece Wk to be scanned by the sensor 4 based on the generated effective scanning region.

In addition, as described above, the 3D calculation unit 54 of the offline teaching device 5 according to the second embodiment moves a position of an effective scanning region designated by an operator operation (for example, the effective scanning region AR34 shown in FIG. 16) based on a movement amount of the effective scanning region. The scanning operation creation unit 552 creates a teaching program for scanning an effective scanning region based on the operation trajectory RT3 of welding and at least one effective scanning region among all the effective scanning regions (for example, the effective scanning regions AR31 to AR35 shown in FIG. 17) including the moved effective scanning region (for example, the effective scanning region AR34 shown in FIG. 16). Accordingly, the offline teaching device 5 according to the second embodiment can generate an effective scanning region at a position more suitable for a teaching portion by allowing each effective scanning region indicating a teaching portion to move. Therefore, the offline teaching device 5 according to the second embodiment can more efficiently create a scanning operation teaching program more suitable for the workpiece Wk to be scanned by the sensor 4 based on the generated effective scanning region.

As described above, the offline teaching device 5 according to the second embodiment includes one or more computers communicably connected to the input device UI3 by an operator operating the input device UI3. An operator inputs data (example of the three-dimensional shape data) of the 3D model MD3 of the workpiece Wk produced by welding to a computer, inputs, to the computer, a scanning section in which the appearance shape of the workpiece Wk is scanned (for example, scanning sections SR213, SR222, and SR232 shown in FIG. 13), and inputs, to the computer, a shape (for example, a linear shape, a curved shape, or a shape including a straight line and a curved line) of a scanning portion to be scanned in the scanning section. The offline teaching device 5 creates a teaching program for causing the welding robot MC1 that performs welding to scan an effective scanning region (example of the three-dimensional region) based on the shape of the scanning portion.

Accordingly, the offline teaching device 5 according to the second embodiment can automatically create a scanning operation teaching program by acquiring the data of the 3D model MD3 of the workpiece Wk, the scanning section in which the appearance shape of the workpiece Wk is scanned, and the shape of the scanning portion to be scanned in the scanning section.

Although various embodiments are described above with reference to the drawings, it is needless to say that the present disclosure is not limited to such examples. It is apparent to a person skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, components in the various embodiments described above may be combined freely in a range without deviating from the spirit of the disclosure.

The present application is based on Japanese Patent Application No. 2021-104355 filed on June 23, 2021, and the contents thereof are incorporated herein by reference.

### INDUSTRIAL APPLICABILITY

The present disclosure is useful as an offline teaching device and an offline teaching method for more efficiently creating a scanning operation teaching program of a sensor executed by a welding robot.

### REFERENCE SIGNS LIST

1: host device
2: robot control device
3: inspection control device
4: sensor
5: offline teaching device
10, 20, 30, 50: communication unit
11, 21, 31, 51: processor
12, 22, 32, 52: memory
53: input and output unit
54: 3D operation unit
55: program creation unit
551: welding operation creation unit
552: scanning operation creation unit
100: welding system
200: manipulator
300: wire feeding device
301: welding wire
400: welding torch
500: power supply device
AR0: effective scanning range
AR11, AR12, AR13, AR14, AR15, AR151, AR152, AR21, AR22, AR23, AR31, AR32, AR33, AR34, AR35: effective scanning regions
MC1: welding robot
MD1, MD2, MD3: 3D model
MN1, MN2, MN3: monitor
RP: rotation reference point
SR1, SR2, SR213, SR222, SR232: scanning section
UI3: input device
WLM11, WLM12, WLM21, WLM22: welding line
Wk: workpiece

## Claims

1. An offline teaching device comprising:
an input unit that receives an operator operation;
an acquisition unit that acquires three-dimensional shape data of a workpiece produced by welding, an operation trajectory of the welding, and a scanning range of a sensor configured to scan an appearance shape of the workpiece;
a generation unit that generates three-dimensional regions based on the acquired scanning range and a scanning section designated by the operator operation, the three-dimensional regions being scanned by the sensor; and
a control unit that disposes at least one of the three-dimensional regions on the three-dimensional shape data of the workpiece based on the operator operation input to the input unit, and that creates and outputs, to a welding robot that performs the welding, a teaching program for scanning the three-dimensional region based on the disposed three-dimensional region and the operation trajectory of the welding.

2. The offline teaching device according to claim 1, wherein
the control unit creates the teaching program based on the disposed three-dimensional region, the operation trajectory of the welding, and operation information of the welding robot that performs the welding, which is associated with the three-dimensional shape data.

3. The offline teaching device according to claim 2, wherein
the control unit generates, based on the operation information, various operations of the welding robot for the workpiece and a scanning operation for each of the three-dimensional regions executed by the welding robot, and generates the teaching program by associating the various operations with the scanning operation corresponding to each of the generated three-dimensional regions.

4. The offline teaching device according to claim 1, wherein
the control unit receives a designation of a shape of a scanning portion scanned in each of the three-dimensional regions by the operator operation, and creates and outputs a teaching program for causing the welding robot to scan the three-dimensional regions based on the designated shape of the scanning portion in each of the three-dimensional regions, the disposed three-dimensional regions and the operation trajectory.

5. The offline teaching device according to claim 1, wherein
the generation unit duplicates and disposes the three-dimensional region based on the operator operation, and
the control unit generates a teaching program for scanning the three-dimensional region based on at least one three-dimensional region among all the three-dimensional regions including the duplicated three-dimensional region and the operation trajectory of the welding.

6. The offline teaching device according to claim 1, wherein
the generation unit rotates the three-dimensional regions based on one point on the three-dimensional region designated by the operator operation and a rotation amount around the one point, and
the control unit creates a teaching program for scanning the three-dimensional region based on the operation trajectory of the welding and at least one three-dimensional region among all the three-dimensional regions including the rotated three-dimensional region.

7. The offline teaching device according to claim 1, wherein
the generation unit moves a position of the three-dimensional region based on a movement amount of the three-dimensional region designated by the operator operation, and
the control unit creates a teaching program for scanning the three-dimensional region based on the operation trajectory of the welding and at least one three-dimensional region among all the three-dimensional regions including the moved three-dimensional regions.

8. An offline teaching method performed by an offline teaching device including one or more computers communicably connected to an input device capable of receiving an operator operation, the offline teaching method comprising:
acquiring three-dimensional shape data of a workpiece produced by welding, an operation trajectory of the welding, and a scanning range of a sensor configured to scan an appearance shape of the workpiece;
generating three-dimensional regions based on the acquired scanning range and a scanning section designated by the operator operation, the three-dimensional regions being scanned by the sensor;
disposing at least one of the three-dimensional regions on the three-dimensional shape data of the workpiece based on the operator operation acquired from the input device; and
creating and outputting, to a welding robot that performs the welding, a teaching program for scanning the three-dimensional region based on the disposed three-dimensional region and the operation trajectory of the welding.

9. An offline teaching method performed using an offline teaching device including one or more computers communicably connected to an input device by an operator operating the input device, the offline teaching method comprising:
inputting three-dimensional shape data of a workpiece produced by welding to the computer;
inputting, to the computer, a scanning section in which an appearance shape of the workpiece is scanned;
inputting, to the computer, a shape of a scanning portion scanned in the scanning section; and
creating a teaching program for causing a welding robot that performs the welding to scan a three-dimensional region based on the shape of the scanning portion.
